(19) **Europäisches Patentamt European Patent Office Office européen des brevets**

(11) **EP 4 503 481 A1**

(12) **EUROPEAN PATENT APPLICATION**
published in accordance with Art. 153(4) EPC

(43) Date of publication:
**05.02.2025 Bulletin 2025/06**

(21) Application number: **22933683.9**

(22) Date of filing: **23.12.2022**

(51) International Patent Classification (IPC):
**H04J 13/10** (2011.01)   **H04L 27/26** (2006.01)

(52) Cooperative Patent Classification (CPC):
**H04J 13/10; H04L 27/26**

(86) International application number:
**PCT/JP2022/047549**

(87) International publication number:
**WO 2023/181556 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 JP 2022049007**

(71) Applicant: **Panasonic Intellectual Property Corporation of America**
**Torrance, CA 90504 (US)**

(72) Inventors:
• **YAMAMOTO, Tetsuya**
  **Kadoma-shi, Osaka 571-0057 (JP)**
• **SHARIATMADARI, Hamidreza**
  **63225 Langen (DE)**
• **SUZUKI, Hidetoshi**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **TERMINAL, BASE STATION, AND COMMUNICATION METHOD**

(57)   This terminal comprises: a control circuit that determines one sequence or one combination from a plurality of sequences or a plurality of combinations of sequences, depending on information regarding the number of information bits in uplink transmission without reference signals; and a transmission circuit that transmits one sequence or a sequence included in one combination.

200

FIG. 7

**EP 4 503 481 A1**

## Description

Technical Field

The present disclosure relates to a terminal, a base station, and a communication method.

Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

Citation List

Non-Patent Literature (hereinafter referred to as "NPL")

NPL 1
3GPP TS38.104 V15.16.0, "NR Base Station (BS) radio transmission and reception (Release 15)," December 2021.
NPL 2

RP-202928, "New WID on NR coverage enhancements," China Telecom, December 2020. NPL 3
3GPP TS38.211 V16.8.0, "NR Physical channels and modulation (Release 16)," December 2021.

NPL 4
3GPP TS38.212 V16.8.0, "NR Multiplexing and channel coding (Release 16)," December 2021.
NPL 5
3GPP TS38.213 V16.8.0, "NR Physical layer procedures for control (Release 16)," December 2021.
NPL 6
3GPP TS38.214 V16.8.0, "NR Physical layer procedures for data (Release 16)," December 2021.
NPL 7
R1-2007584, "Potential solutions for PUCCH coverage enhancement," Huawei, HiSilicon, October 26th - November 13th, 2020.
NPL 8
R1-2009315, "Potential coverage enhancement techniques for PUCCH," Qualcomm Incorporated, Huawei, HiSilicon, October 26th - November 13th, 2020.
NPL 9
R1-2008027, "Discussion on the PUCCH coverage enhancement," CMCC, August 2020.

Summary of Invention

Technical Problem

There is room for consideration on a method for improving the reception performance of a signal in the uplink, however.

One non-limiting and exemplary embodiment facilitates providing a terminal, a base station, and a communication method each capable of improving the reception performance of a signal in the uplink.

A terminal according to an exemplary embodiment of the present disclosure includes: control circuitry, which, in operation, determines one sequence or one combination from a plurality of sequences or a plurality of combinations of sequences according to information on a number of information bits in an uplink transmission without using a reference signal; and transmission circuitry, which, in operation, transmits the one sequence or a sequence included in the one combination, in the uplink transmission without using the reference signal.

It should be noted that general or specific embodiments may be implemented as a system, a method, an integrated circuit, a computer program, a storage medium, or any selective combination thereof.

According to an exemplary embodiment of the present disclosure, it is possible to improve the reception performance of a signal in the uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary feature of a Physical Uplink Control Channel (PUCCH) format;

FIG. 2 illustrates an exemplary PUCCH transmission;

FIG. 3 illustrates an exemplary PUCCH transmission;

FIG. 4 illustrates an exemplary PUCCH transmission;

FIG. 5 illustrates an exemplary operation of a PUCCH transmission;

FIG. 6 is a block diagram illustrating an exemplary configuration focused on part of a base station;

FIG. 7 is a block diagram illustrating an exemplary configuration focused on part of a terminal;

FIG. 8 is a block diagram illustrating an exemplary configuration of the base station;

FIG. 9 is a block diagram illustrating an exemplary configuration of the terminal;

FIG. 10 is a flowchart describing an exemplary operation of the terminal;

FIG. 11 illustrates an exemplary PUCCH transmission;

FIG. 12 illustrates exemplary sequences used for PUCCH transmission;

FIG. 13 illustrates examples of the number of orthogonal sequences and the non-orthogonal sequences used for PUCCH transmission;

FIG. 14 illustrates exemplary sequences used for PUCCH transmission;

FIG. 15 illustrates an exemplary PUCCH transmission;

FIG. 16 illustrates examples of the number of orthogonal sequences and the number of non-orthogonal sequences used for PUCCH transmission;

FIG. 17 illustrates an exemplary architecture of a 3GPP NR system;

FIG. 18 schematically illustrates a functional split between NG-RAN and 5GC;

FIG. 19 is a sequence diagram of a Radio Resource Control (RRC) connection setup/reconfiguration procedure;

FIG. 20 schematically illustrates usage scenarios of enhanced Mobile BroadBand (eMBB), massive Machine Type Communications (mMTC), and Ultra Reliable and Low Latency Communications (URLLC); and

FIG. 21 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (for example, may be referred to as Frequency Range 1 (FR1)), which has been used for cellular communication, a millimeter-wave band such as 28 GHz or 39 GHz band capable of ensuring a wide band (for example, may be referred to as FR2) can be utilized (for example, see NPL 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in 3GPP Release 17 (e.g., referred to as "Rel. 17"), a method of improving the coverage in NR has been studied (e.g., see NPL 2).

In NR, a terminal (for example, also referred to as user equipment (UE)) transmits/receives data in accordance with, for example, resource allocation indicated by a Layer 1 control signal (for example, Downlink Control Information (DCI)) on a downlink control channel (for example, Physical Downlink Control Channel (PDCCH)) from a base station (for example, also referred to as gNB) or Radio Resource Control (RRC) that is Layer 3 (for example, see NPLs 3 to 7).

The terminal feeds back, for example, a response signal (for example, Acknowledgement/Negative Acknowledgement (ACK/NACK) or Hybrid Automatic Repeat ReQuest-ACK (HARQ-ACK)) indicating success or failure in decoding on a downlink data channel (for example, Physical Downlink Control Channel (PDSCH)), by using an uplink control channel (for example, Physical Uplink Control Channel (PUCCH)) (see, for example, NPL 5).

Further, the terminal may use a PUCCH to transmit, in addition to (or instead of) ACK/NACK, a scheduling request (SR) that requests radio resource allocation for uplink and channel state information (CSI) for downlink to the base station. The information transmitted with a PUCCH, such as an ACK/NACK, an SR, and CSI, is also referred to as uplink control information (for example, Uplink Control Information (UCI)).

For example, in a case where the terminal transmits an ACK/NACK for a PDSCH assigned by DCI, the terminal may transmit a PUCCH in accordance with resource allocation indicated by DCI from the base station. For example, the control information included in DCI may include information on a PUCCH resource or information on a timing, e.g. how many slots later a PUCCH is transmitted since the slot in which a PDSCH has been received (for example, K1 or PDSCH-to-PDSCH_feedback timing indication). Further, the control information included in DCI may include information on, for example, the number of ACK/NACK bits (e.g., Downlink Assignment Index (DAI)).

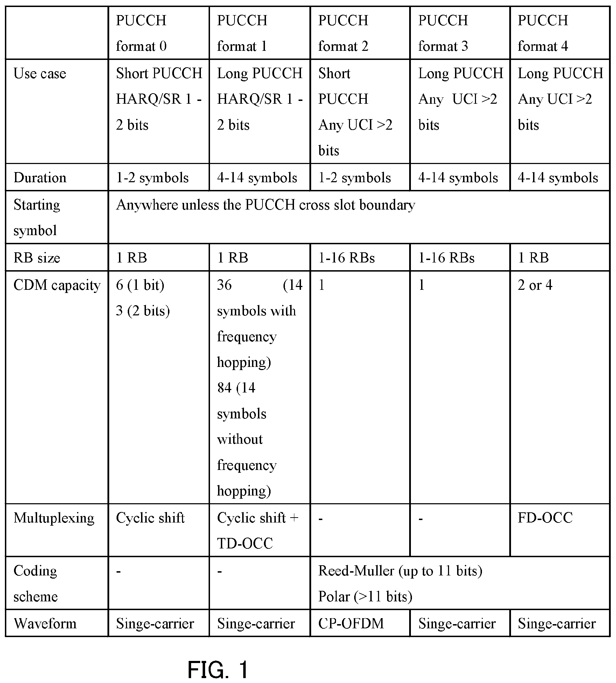

In NR, five PUCCH formats (e.g., PUCCH format 0 to 4) are defined (e.g., see NPL 3). FIG. 1 illustrates exemplary features of PUCCH formats 0 to 4.

As illustrated in FIG. 1, PUCCH format 0 is configured with 1 or 2 symbols, and the terminal is capable of transmitting UCI of up to 2 bits. PUCCH format 1 is configured with 4 to 14 symbols, and the terminal is capable of transmitting UCI of up to 2 bits. PUCCH format 2 is configured with 1 or 2 symbols, and the terminal is capable of transmitting UCI larger than 2 bits. PUCCH format 3 is configured with 4 to 14 symbols, and is capable of transmitting UCI larger than 2 bits. PUCCH format 4 is configured with 4 to 14 symbols, the terminal is capable of transmitting UCI larger than 2 bits, and further, it is possible to multiplex a plurality of terminals in the same time- and frequency resource (for example, a resource block (RB)) by using an orthogonal cover code (OCC).

For example, PUCCH formats 1, 2, 3, and 4 are each configured such that a reference signal (for example, a Demodulation Reference Signal (DMRS)) used in channel estimation for demodulation is placed in a PUCCH resource (for example, see NPL 3).

On the other hand, PUCCH format 0 may not use a DMRS (for example, does not require a DMRS). For example, in a case where PUCCH format 0 is used, the transmission side (for example, the terminal) maps cyclic shift sequences (for example, with a sequence length of 12) different from each other to one Orthogonal Frequency Division Multiplexing (OFDM) symbol and one resource block (for example, 12 subcarriers) according to information bits, and transmits the cyclic shift sequences. The reception side (for example, the base station) demodulates information bits by using the cyclic shift sequences, with a correlation processing-based maximum likelihood detection.

Here, a method for transmitting a PUCCH without using a DMRS (for example, also referred to as DMRS-less PUCCH) has been reported to be a technology capable of improving transmission quality and effective for coverage enhancement as compared with a PUCCH transmission method that uses a DMRS (see, for example, NPLs 7 to 9). For this reason, for example, a transmission of UCI larger than 2 bits, which is supported in an existing PUCCH format using a DMRS, is considered to be supported in a PUCCH transmission method without using a DMRS.

Hereinafter, examples of a PUCCH transmission method without using a DMRS will be described.

<Method 1>

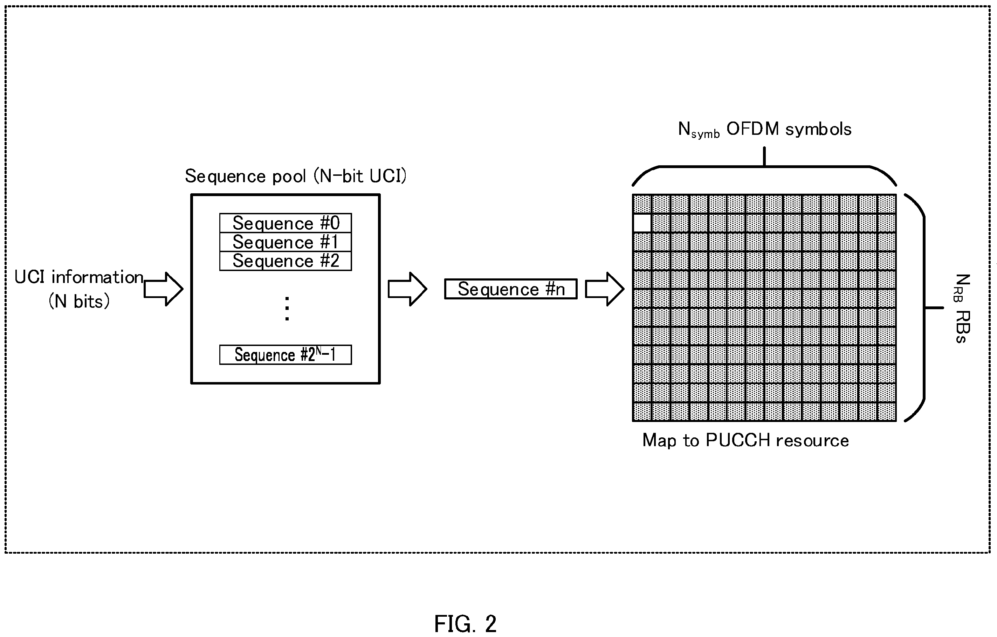

FIG. 2 illustrates a concept of a PUCCH transmission method in Method 1.

For example, NPL 7 discloses that sequence selection is applied as a PUCCH transmission method without using a DMRS, in which N-bit UCI is transmitted. For example, as illustrated in FIG. 2, a sequence pool including $2^N$ sequences each of which is associated with each value of N-bit UCI is prepared for the N-bit UCI. The terminal selects one sequence (for example, sequence #n) from the $2^N$ sequences, for example, according to the UCI bit value, and maps the selected sequence to a PUCCH resource and transmits the selected sequence. The PUCCH resource may be configured with, for example, $N_{symb}$ OFDM symbols and $N_{RB}$ resource blocks.

Hereinafter, this method will be referred to as "Method 1."

In Method 1, the operation of selecting one sequence with sequence length M from N-bit UCI, where the sequence length of the sequence is M, can be regarded as a kind of precoding, for example. For example, the method described in NPL 7 or another method may be applied to the method for selecting one sequence with sequence length M from N-bit UCI.

Further, in a case where the number of resource elements (REs) included in a PUCCH resource is larger than sequence length M, the terminal may repeat a sequence (for example, by repetition) and map the sequence to the PUCCH resource, or may extend a sequence (for example, by extension) and map the sequence to the PUCCH resource.

<Method 2>

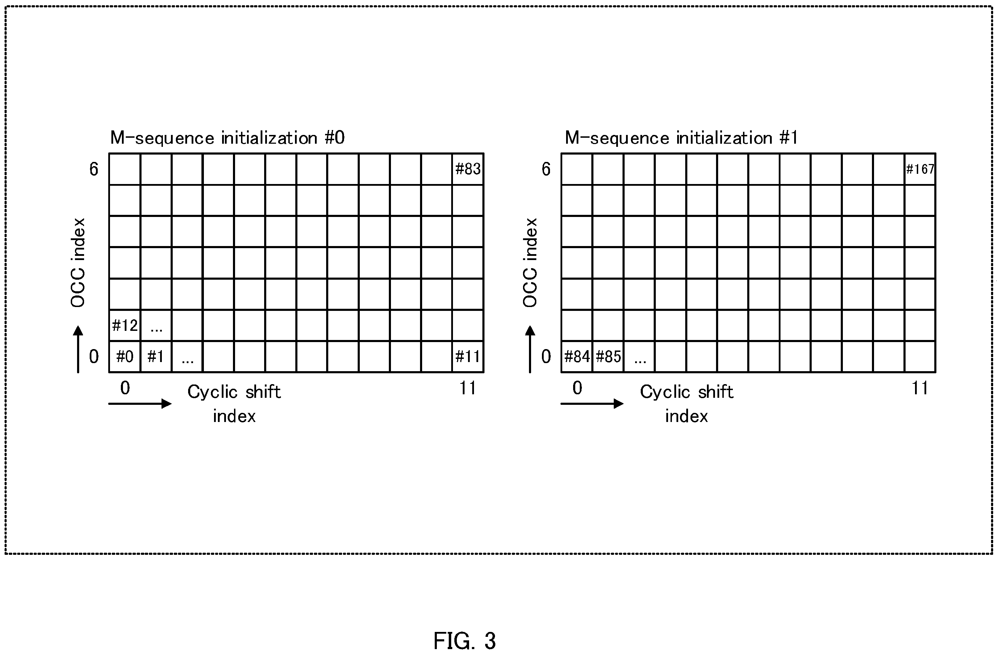

FIG. 3 illustrates a concept of a PUCCH transmission method in Method 2.

For example, in the same manner as in Method 1, NPL 8 discloses that sequence selection is applied as a PUCCH transmission method without using a DMRS, in which N-bit UCI is transmitted. For example, in the same manner as in Method 1, a sequence pool including $2^N$ sequences each of which is associated with each value of N-bit UCI is prepared for the N-bit UCI. The terminal selects one sequence from the $2^N$ sequences, for example, according to the UCI bit value, and maps the selected sequence to a PUCCH resource and transmits the selected sequence.

Further, NPL 8 discloses the use of a combination of an orthogonal sequence(s) and a non-orthogonal sequence(s) to generate a sequence included in a sequence pool.

For example, first, orthogonal sequences consisting of $N_O = N_{subcarrier} \times N_{symb}$ sequences are prepared. Here, $N_{subcarrier}$ indicates the number of subcarriers per one symbol assigned to a PUCCH resource, and $N_{symb}$ indicates the number of symbols assigned to the PUCCH resource. For example, it is possible to generate $N_{subcarrier}$ cyclic shift sequences for sequences with sequence length $N_{subcarrier}$. Further, by performing code spreading with an orthogonal cover code (OCC) according to number $N_{symb}$ of symbols, $N_O = N_{subcarrier} \times N_{symb}$ orthogonal sequences can be generated.

For example, in a case where number $N_O$ of orthogonal sequences is smaller than $2^N$, an orthogonal sequence(s) and a non-orthogonal sequence(s) may be combined such that $N_O \times N_{NO} \geq 2^N$ sequences are generated. For example, the method described in NPL 8 (e.g., a method for generating a plurality of non-orthogonal sequences by varying the initial value of an M sequence) or another method may be applied to the method for generating a non-orthogonal sequence.

Hereinafter, this method will be referred to as "Method 2."

FIG. 3 illustrates sequences (for example, sequence numbers #0 to #167) that can be generated in the case of $N_{subcarrier} = 12$, $N_{symb} = 7$, and $N_{NO} = 2$ as an example.

<Method 3>

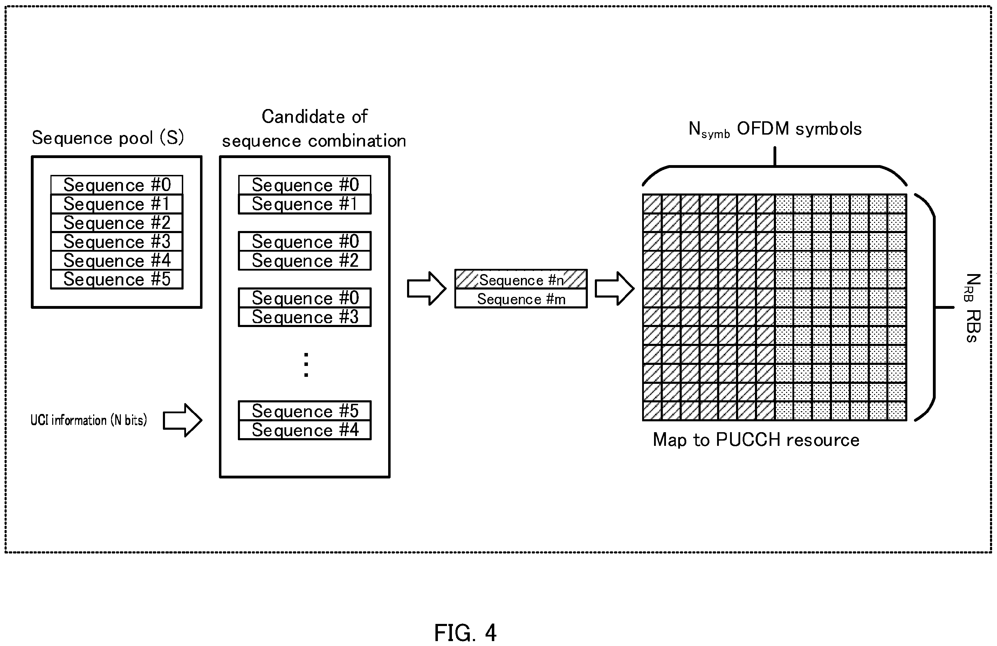

FIG. 4 illustrates a concept of a PUCCH transmission method in Method 3.

NPL 9 discloses, for example, a method for transmitting a UCI bit(s) with a combination of sequences.

For example, a sequence pool including S (six in the example of FIG. 4) sequences is prepared. For example, $2^N$ combinations of sequences, each of which is associated with each value of N-bit UCI, may be prepared for the N-bit UCI.

For example, the terminal selects one combination (sequences #n and #m in the example of FIG. 4) from a plurality of combinations of sequences according to the UCI bit value, and maps the plurality of sequences included in the selected combination to a PUCCH resource and transmits the plurality of sequences.

Here, the number of combinations of sequences is $_SC_K$ when the number of sequences included in one combination of sequences that the terminal selects is K (two in the example in FIG. 4). Accordingly, number S of sequences included in a sequence pool may be prepared such that $S!/(K!(S - K)!) \geq 2^N$ is satisfied with respect to N-bit UCI, and further, K sequences may be selected (and transmitted).

Alternatively, different information may be transmitted depending on the order in which sequences are transmitted or the order in which sequences are mapped. For example, in FIG. 4, a combination in the order of sequences #n and #m and a combination in the order of sequences #m and #n may be associated with UCI values that are different from each other. In this case, for example, number S of sequences included in a sequence pool may be prepared such that $S!/(S - K)! \geq 2^N$ is satisfied with respect to N-bit UCI, and further, K sequences may be selected (and transmitted).

Then, the terminal maps the selected plurality of sequences to a PUCCH resource and transmits the selected plurality of sequences.

Hereinafter, this method will be referred to as "Method 3."

In the example illustrated in FIG. 4, S = 6 and K = 2. For example, in FIG. 4, when different information is transmitted depending on the order in which sequences are transmitted and the order in which sequences are mapped, $S!/(S - K)! = 1080$, and thus, UCI transmissions with N = 10 bits (the number of combinations of sequences necessary for transmission: $2^{10} = 1024$) are possible.

Methods 1 to 3 of PUCCH transmission have been described above.

In Methods 1 to 3 described above, a sequence pool including $2^N$ sequences or a combination of $2^N$ sequences is prepared for N-bit UCI, and the terminal transmits one sequence or one combination of sequences according to the UCI bit value. The base station determines, with processing such as a correlation processing-based maximum likelihood detection, which sequence or which sequence combination has been transmitted from the terminal, thereby demodulating the UCI bits.

This UCI demodulation operation is operable when there is no discrepancy in the number of UCI bits to be transmitted through PUCCH between the base station and the terminal. In NR, in a case where a PDSCH is assigned by DCI, the DCI may include, in addition to information on a PUCCH resource for ACK/NACK transmission, information on the number of ACK/NACK bits (for example, DAI).

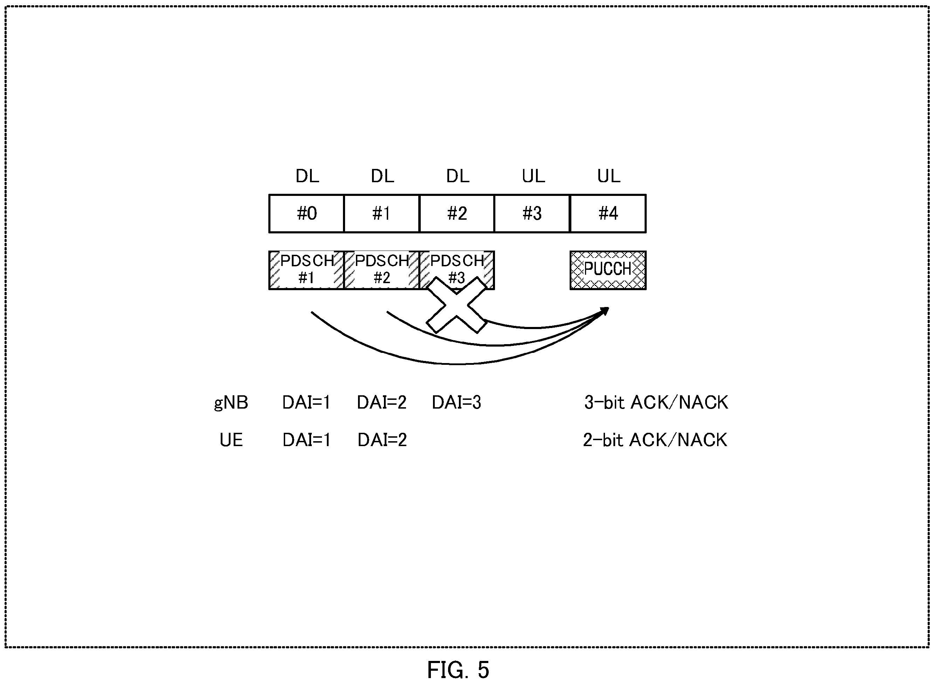

For example, in a case where a plurality of ACK/NACKs for each of a plurality of PDSCHs is multiplexed in the same PUCCH and transmitted, the number of UCI bits to be transmitted through the PUCCH assumed by the base station and the number of UCI bits to be transmitted through the PUCCH assumed by the terminal may be different when the terminal fails in the decoding of the lastly transmitted DCI. As an example, as illustrated in FIG. 5, when the terminal fails to decode the last DCI (including DAI = 3, for example), the number of UCI bits (for example, three bits) assumed by the base station and the number of UCI bits (for example, two bits) assumed by the terminal may be different.

When the number of UCI bits to be transmitted through the PUCCH assumed by the base station and the number of UCI bits to be transmitted through the PUCCH assumed by the terminal are different, the UCI decoding performance may be significantly degraded.

For example, it is also possible for the base station to decode UCI by assuming both the number of UCI bits in the case of successful DCI decoding and the number of UCI bits in the case of unsuccessful DCI decoding, considering a failure in DCI decoding at the terminal. In this case, the base station may perform demodulation multiple times, which may complicate the demodulation processing.

In a non-limiting and exemplary embodiment of the present disclosure, a method for improving the reception performance of a signal in an uplink transmission (for example, a PUCCH transmission or a UCI transmission) without using a DMRS will be described.

For example, in a method for transmitting information bits (for example, UCI bits) by sequence selection or selection of a combination of sequences without using a DMRS (for example, DMRS-less PUCCH), the terminal may include information on the number of UCI in sequence selection or sequence combination transmit the information. Thus, for example, even in a case where a discrepancy in the number of UCI bits occurs between the base station and the terminal, the base station can identify the number of UCI bits transmitted by the terminal based on the sequence or combination of sequences used for UCI transmission.

Hereinafter, non-limiting embodiments of the present disclosure will be described.

[Overview of Communication System]

A communication system according to each embodiment of the present disclosure includes, for example, at least one base station and at least one terminal.

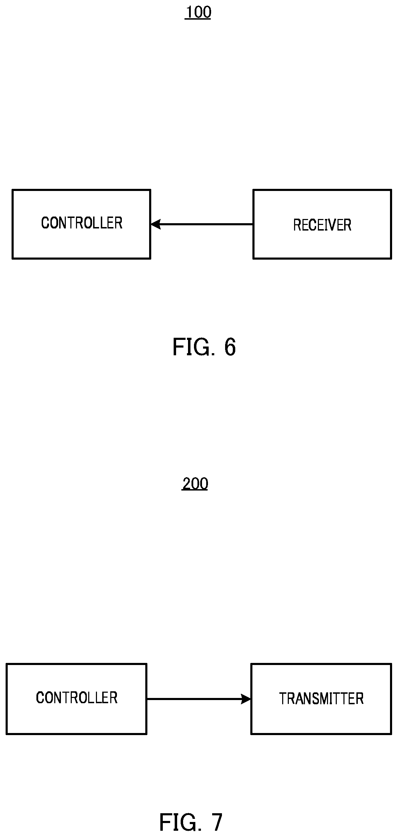

FIG. 6 is a block diagram illustrating an exemplary configuration focused on part of base station 100 according to an example of the present disclosure, and FIG. 7 is a block diagram illustrating an exemplary configuration focused on part of terminal 200 according to an example of the present disclosure.

In base station 100 illustrated in FIG. 6, a receiver (corresponding to, for example, reception circuitry) receives a signal (for example, a PUCCH signal). A controller (corresponding to, for example, control circuitry) identifies, based on an association of information on the number of information bits (for example, UCI bits) with a sequence or a combination of sequences in an uplink transmission without using a reference signal (for example, a DMRS), the number of information bits corresponding to a sequence included in the signal.

In terminal 200 illustrated in FIG. 7, a controller (corresponding to, for example, control circuitry) determines one sequence or one combination from a plurality of sequences or a plurality of combinations of sequences according to information on the number of information bits (for example, UCI bits) in an uplink transmission without using a reference signal (such as a DMRS). A transmitter (corresponding to, for example, transmission circuitry) transmits the one sequence or a sequence included in the one combination in the uplink transmission without using the reference signal.

(Embodiment 1)

[Configuration of Base Station]

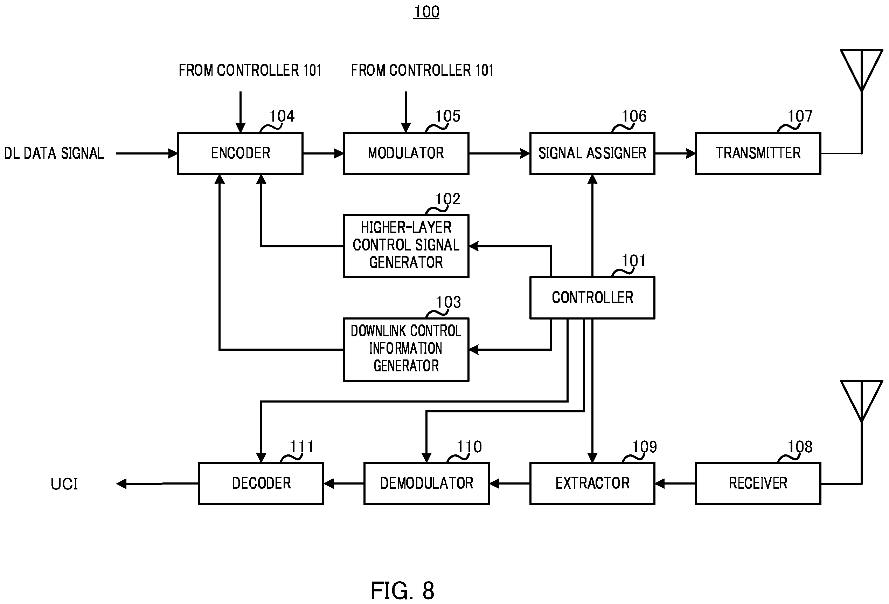

FIG. 8 is a block diagram illustrating an exemplary configuration of base station 100 according to Embodiment 1. In FIG. 8, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Note that, at least one of controller 101, higher-layer control signal generator 102, downlink control information generator 103, encoder 104, modulator 105, signal assigner 106, extractor 109, demodulator 110, and decoder 111 which are illustrated in FIG. 8 may be included in the controller illustrated in FIG. 6. Further, receiver 108 illustrated in FIG. 8 may be included in the receiver illustrated in FIG. 6.

Controller 101 determines, for example, at least one of information on a PUCCH transmission method and information on a PUCCH resource, and outputs the determined information to at least one of higher-layer control signal generator 102 and downlink control information generator 103. The information on the PUCCH transmission method may include, for example, information on a PUCCH format and information on whether to apply a PUCCH transmission method without using a DMRS. Further, the information on the PUCCH resource may include, for example, information on a PUCCH resource set and the number of Repetitions.

Further, controller 101 determines, for example, information on a downlink signal for transmitting a downlink data signal, a higher-layer control signal, or downlink control information (e.g., Modulation and Coding Scheme (MCS) and radio resource allocation), and outputs the determined information to encoder 104, modulator 105, and signal assigner 106. Further, controller 101 outputs information on a downlink signal (for example, a data signal or a higher-layer control signal) to downlink control information generator 103, for example.

Further, controller 101 determines, for example, information (e.g., PUCCH resource) on the transmission of an uplink control signal (e.g., PUCCH) in terminal 200. Controller 101 outputs the determined information on the uplink control signal to at least one of higher-layer control signal generator 102 and downlink control information generator 103, for example. Further, controller 101 determines, for example, information on a PUCCH resource and a sequence (or a candidate for a combination of sequences) to be used for PUCCH (for example, UCI) transmission, and outputs the determined information to extractor 109, demodulator 110, and decoder 111.

Higher-layer control signal generator 102 generates a higher-layer control signal bit string, for example, based on the information inputted from controller 101, and outputs the higher-layer control signal bit string to encoder 104.

Downlink control information generator 103 generates a downlink control information (for example, DCI) bit string, for example, based on the information inputted from controller 101, and outputs the generated DCI bit string to encoder 104. Downlink control information generator 103 may include, for example, the information on the PUCCH resource inputted from controller 101 in a PUCCH Resource Indicator (PRI) field in the DCI bit string. Note that, the control information may be transmitted to a plurality of terminals.

Encoder 104 encodes downlink data (e.g., a DL data signal), the bit string inputted from higher-layer control signal generator 102, or the DCI bit string inputted from downlink control information generator 103, for example, based on the information inputted from controller 101. Encoder 104 outputs the encoded bit string to modulator 105.

Modulator 105 modulates encoded bit string inputted from encoder 104, for example, based on the information inputted from controller 101, and outputs the modulated signal (for example, a symbol string) to signal assigner 106.

Signal assigner 106 maps, for example, based on the information inputted from controller 101 and indicating the radio resource, the symbol string (including, for example, a downlink data signal or a control signal) inputted from modulator 105 to the radio resource. Signal assigner 106 outputs a signal that has been mapped to a downlink to transmitter 107.

Transmitter 107 performs, for example, transmission waveform generation processing such as orthogonal frequency division multiplexing (OFDM), on a signal inputted, for example, from signal assigner 106. Further, for example, in the case of an OFDM transmission in which a cyclic prefix (CP) is added, transmitter 107 performs Inverse Fast Fourier Transform (IFFT) processing on the signal, and adds a CP to the signal after the IFFT. Further, transmitter 107 performs, for example, RF processing such as D/A conversion or up-conversion on the signal, and transmits a radio signal to terminal 200 via an antenna.

Receiver 108 performs RF processing such as down-conversion or A/D conversion on the uplink signal received from terminal 200 through, for example, an antenna. Further, in the case of an OFDM transmission, receiver 108 performs Fast Fourier Transform (FFT) processing on the received signal, for example, and outputs the obtained frequency domain signal to extractor 109.

Extractor 109 extracts, for example, based on the information inputted from controller 101, a radio resource portion from the received signal inputted from receiver 108, in which the uplink control signal (for example, PUCCH) is transmitted, and outputs the extracted radio resource portion to demodulator 110.

Demodulator 110 demodulates the uplink control signal (for example, PUCCH) inputted from extractor 109, for example, based on the information inputted from controller 101. For example, demodulator 110 may identify a sequence (or a combination of sequences) transmitted in the PUCCH. Demodulator 110 outputs, for example, the demodulation result to decoder 111.

Decoder 111 performs, for example, based on the information inputted from controller 101 and the demodulation result inputted from demodulator 110, error correction decoding of the uplink control signal (e.g., PUCCH) and obtains a decoded reception bit sequence (for example, UCI bit string). For example, decoder 111 may identify the number of UCI bits and the reception UCI bit string based on the sequence (or combination of sequences) identified in demodulator 110.

[Configuration of Terminal]

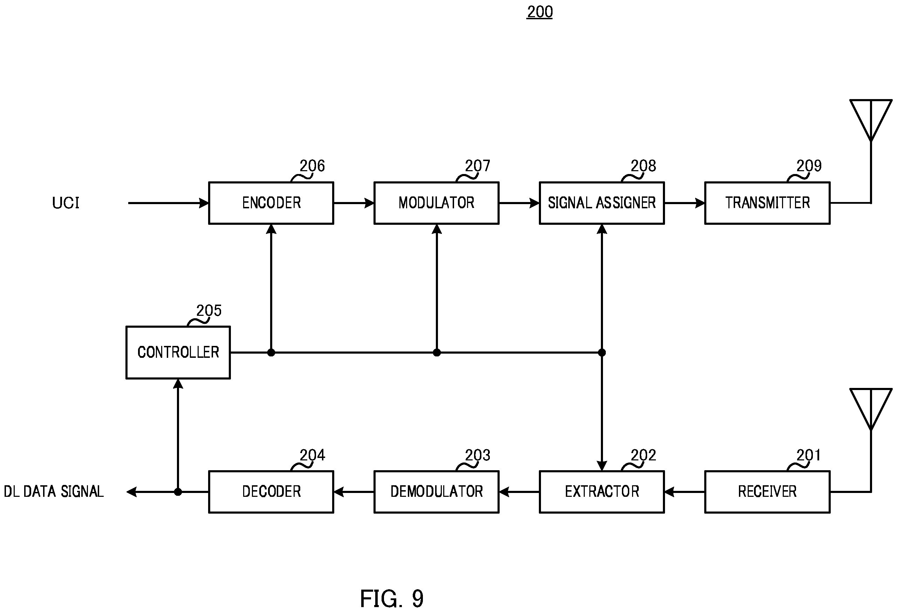

FIG. 9 is a block diagram illustrating an exemplary configuration of terminal 200 according to an exemplary embodiment of the present disclosure. For example, in FIG. 9, terminal 200 includes receiver 201, extractor 202, demodulator 203, decoder 204, controller 205, encoder 206, modulator 207, signal assigner 208, and transmitter 209.

Note that, at least one of extractor 202, demodulator 203, decoder 204, controller 205, encoder 206, modulator 207, and signal assigner 208 which are illustrated in FIG. 9 may be included in the controller illustrated in FIG. 7. Further, transmitter 209 illustrated in FIG. 9 may be included in the transmitter illustrated in FIG. 7.

Receiver 201 receives a downlink signal (for example, a downlink data signal or downlink control information) from base station 100 via an antenna, performs RF processing such as down-conversion or A/D conversion on the received radio signal, and obtains a received signal (baseband signal). Further, when receiver 201 receives an OFDM signal, receiver 201 performs FFT processing on the received signal and converts the received signal into that in the frequency domain. Receiver 201 outputs the received signal to extractor 202.

Extractor 202 extracts, for example, based on information on a radio resource in downlink control information, which is inputted from controller 205, a radio resource portion, which may include downlink control information, from the received signal inputted from receiver 201, and outputs the radio resource portion to demodulator 203. Further, extractor 202 extracts, based on information on a radio resource in a data signal, which is inputted from controller 205, a radio resource portion including downlink data, and outputs the radio resource portion to demodulator 203.

Demodulator 203 demodulates, for example, based on information inputted from controller 205, a signal inputted (for example, PDCCH or PDSCH) from extractor 202, and outputs the demodulation result to decoder 204.

Decoder 204 performs, for example, based on information inputted from controller 205, error correction decoding of the PDCCH or PDSCH by using the demodulation result inputted from demodulator 203, and obtains, for example, downlink reception data, a higher-layer control signal, or downlink control information. Decoder 204 outputs the higher-layer control signal and the downlink control information to controller 205, and outputs the downlink reception data. Further, decoder 204 may generate a response signal (for example, ACK/-NACK) based on the decoding result of the downlink reception data.

Controller 205 determines, for example, a PUCCH resource based on a signal inputted from decoder 204 (for example, a higher-layer control signal or downlink control information). The higher-layer control signal may include information on a PUCCH transmission method and information on a PUCCH resource, for example. Further, the downlink control information may include information on a PUCCH resource in a PRI field, for example. Further, controller 205 may determine information on a sequence pool used for the transmission of a PUCCH without using a DMRS, for example. Controller 205 outputs the determined information to, for example, encoder 206, modulator 207, and signal assigner 208.

Encoder 206 encodes UCI, for example, based on the information inputted from controller 205. Encoder 206 outputs the encoded bit string to modulator 207. Note that, the encoding may not be applied to UCI depending on the PUCCH format.

Modulator 207 modulates, for example, based on the information inputted from controller 205, the encoded bit string inputted from encoder 206, and outputs the modulated signal (symbol string) to signal assigner 208. For example, modulator 207 may select a sequence (or a combination of sequences) to be used for PUCCH (UCI) transmission from the encoded bit string, and may output the selected sequence to signal assigner 208.

Signal assigner 208 maps a signal (for example, a sequence) inputted from modulator 207 to a radio resource, for example, based on the information inputted from controller 205. Signal assigner 208 outputs, for example, an uplink signal in which the signal is mapped, to transmitter 209.

Transmitter 209 generates a transmission signal waveform, such as OFDM, for the signal inputted from signal assigner 208. Further, in the case of an OFDM transmission using a CP, for example, transmitter 209 performs IFFT processing on the signal and adds a CP to the signal after the IFFT. Alternatively, in a case where transmitter 209 generates a single carrier waveform, a Discrete Fourier Transformer (DFT) may be added to a rear stage of modulator 207 or to a front stage of signal assigner 208, for example (not illustrated). Further, transmitter 209 performs, for example, RF processing such as D/A conversion and up-conversion on the transmission signal, and transmits the radio signal to base station 100 via an antenna.

[Operation Examples of Base Station 100 and Terminal 200]

Descriptions will be given of operation examples of base station 100 and terminal 200 that have the above configurations.

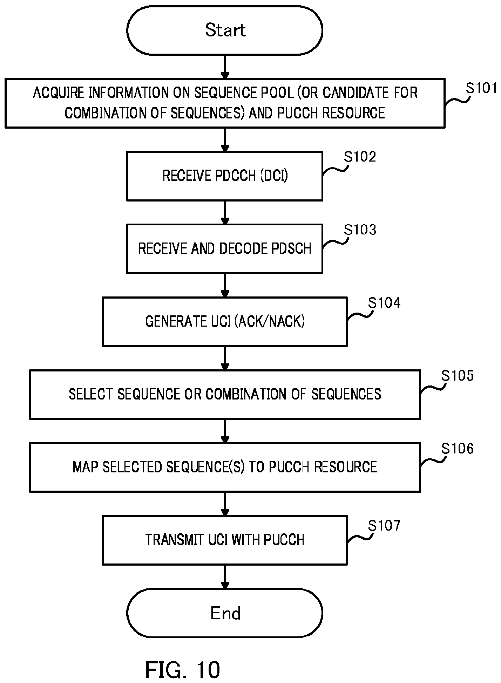

FIG. 10 is a flowchart describing an exemplary operation of terminal 200.

As illustrated in FIG. 10, terminal 200 acquires, for example, information on a sequence pool (or a candidate for a combination of sequences) to be used for PUCCH (UCI) transmission and information on a PUCCH resource (S101).

The information on the sequence pool (or the candidate for the combination of sequences) may be configured (or indicated) to terminal 200 by higher-layer signaling (for example, a Radio Resource Control (RRC) parameter) from base station 100, for example. Further, the information on the PUCCH resource may be configured, for example, by higher-layer signaling, such as RRC, from base station 100 to terminal 200, or may be configured by information included in DCI.

Terminal 200 receives a PDCCH (for example, including DCI) (S102).

Terminal 200 receives and decodes a PDSCH assigned by the DCI included in the received PDCCH, for example (S103).

Terminal 200 generates an ACK/NACK, for example, based on the reception success/failure (or decoding success/failure) of the PDSCH (S104).

Terminal 200 selects a sequence (or a combination of sequences) corresponding to the value of the generated ACK/NACK (e.g., the UCI bit value) from the sequence pool (or the candidate for the combination of sequences), for example (S105).

Terminal 200, for example, maps the selected sequence to a PUCCH resource (S106), and transmits the UCI with a PUCCH (S107).

Note that, FIG. 10 illustrates an example in which an ACK/NACK is transmitted by UCI, but the present disclosure is not limited to this. For example, when an SR or CSI is transmitted by UCI, the reception of PDCCH (S102) and the reception and decoding of PDSCH (S103) at terminal 200 may be omitted.

Further, in FIG. 10, a case where information on a sequence (or a candidate for a combination of sequences) used for PUCCH transmission is indicated (or configured) to terminal 200 has been described, but the present disclosure is not limited thereto, and the information may be defined in a specification in advance. In this case, the reception processing of the information on the sequence pool may be omitted in the processing of S101 in FIG. 10.

Next, an exemplary transmission method of a PUCCH (for example, UCI) without using a DMRS will be described.

For example, in the present embodiment, it is assumed that the minimum value of the number of UCI bits supported in a PUCCH transmission without using a DMRS is "$N_{min}$", and that the maximum value of the number of UCI bits supported in a PUCCH transmission without using a DMRS is "$N_{max}$".

For example, $N_{min}$ may be one bit, three bits which is the minimum number of UCI bits supported by PUCCH format 3, or another value other than one bit and three bits.

Further, for example, $N_{max}$ may be 11 bits which are the maximum number of UCI bits supported with a Reed Muller code in an existing PUCCH format, or may be another value other than 11 bits.

In the present embodiment, as an example, a method for transmitting a UCI bit(s) by sequence selection (for example, Methods 1 and 2) is applied as a PUCCH transmission method without using a DMRS.

For example, as sequences included in a sequence pool used for sequence selection,

[1]

$$\sum_{n=N_{min}}^{N_{max}} 2^n \quad \text{or} \quad \sum_{n=N_{min}}^{N_{max}} 2^n$$

or more
sequences may be prepared.

Terminal 200 selects, for example, from

[2]

$$\sum_{n=N_{min}}^{N_{max}} 2^n$$

sequences, one sequence according to the number of UCI bits to be generated and the UCI bit value. Then, terminal 200 maps the selected sequence to a PUCCH resource and transmits the selected sequence.

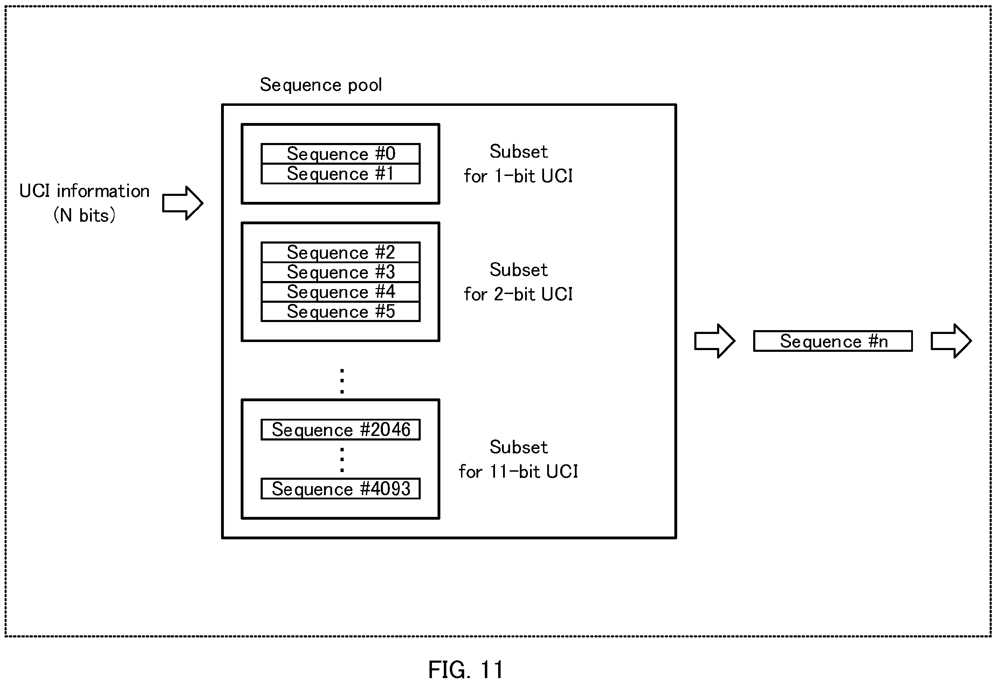

FIG. 11 illustrates a sequence pool in the case of $N_{min} = 1$ and $N_{max} = 11$ as an example. As illustrated in FIG. 11, 4094 sequences included in the sequence pool are divided into subsets each of which corresponds to each number of UCI bits (for example, one bit to 11 bits). For example, a sequence pool includes a plurality of subsets each of which is associated with a candidate for the number of UCI bits (one bit to 11 bits in FIG. 11). Further, as illustrated in FIG. 11, each of a plurality of subsets includes, for example, sequences each of which is associated with a candidate for UCI bits of N bits (for example, $2^N$ values).

In the example illustrated in FIG. 11, the subset of sequences #0 and #1 corresponds to 1-bit UCI. For example, sequence #0 may correspond to UCI bit '0', and sequence #1 may correspond to UCI bit T1'.

Further, in the example illustrated in FIG. 11, the subset of sequences #2 to #5 corresponds to 2-bit UCI. For example, sequences #2 to #5 may correspond to UCI bits '00', '01', '10', and '11', respectively.

Similarly, subsets of sequences may be associated with 3-bit UCI to 11-bit UCI, respectively. For example, the number of sequences included in a subset corresponding to N-bit UCI is $2^N$.

When terminal 200 transmits N-bit UCI, for example, terminal 200 may select one subset from a plurality of subsets according to the number of bits of the UCI (N bits), and may select one sequence from $2^N$ sequences included in the selected subset according to the value of the UCI bits.

As described above, according to the present embodiment, terminal 200 can transmit UCI bit information by a sequence selected from a sequence pool. Further, terminal 200 can transmit information on the number of UCI bits by a subset to which a sequence to be transmitted belongs. Further, base station 100 can, for example, demodulate a PUCCH, determine which sequence has been transmitted, and identify a subset to which the sequence belongs, thereby identifying the number of UCI bits that terminal 200 has transmitted.

Thus, for example, even in a case where terminal 200 fails in DCI decoding, base station 100 can identify, in addition to the UCI bits transmitted by terminal 200, the number of UCI bits accurately, based on the received sequence of UCI, and thus, the discrepancy in the number of UCI bits between base station 100 and terminal 200 can be suppressed.

The above-described PUCCH transmission method is applicable, for example, to Method 1 and Method 2. Hereinafter, examples in which the PUCCH transmission method according to the present embodiment is applied to each of Method 1 and Method 2 will be described.

[Method 1]

<Step 1>

With respect to terminal 200, a sequence pool including

[3]

$$\sum_{n=N_{min}}^{N_{max}} 2^n$$

sequences is prepared.

For example, $N_{min}$ indicates the minimum value of the number of UCI bits supported in a PUCCH transmission without using a DMRS (for example, DMRS-less PUCCH), and $N_{max}$ indicates the maximum value of the number of UCI bits supported in a PUCCH transmission without using a DMRS. The values of $N_{min}$ and $N_{max}$ may be values determined in advance in a specification. Al-

ternatively, the values of $N_{min}$ and $N_{max}$ may be semi-static parameters configured to terminal 200 by a higher layer such as an RRC. For example, $N_{min} = 1$ or $N_{min} = 3$, or other values may be used. Further, $N_{max} = 11$ may be used, or another value may be used.

<Step 2>

Terminal 200 selects, for example, according to the number of UCI bits to be generated and the UCI bit value, one sequence from a sequence pool including

[4]

$$\sum_{n=N_{min}}^{N_{max}} 2^n$$

sequences.

Here, the sequence length of the sequence is denoted as M. Sequence length M may be, for example, a predetermined value in a specification, such as 12, 24, 48, or the like, or may be a semi-static parameter configured to terminal 200 by a higher layer such as an RRC.

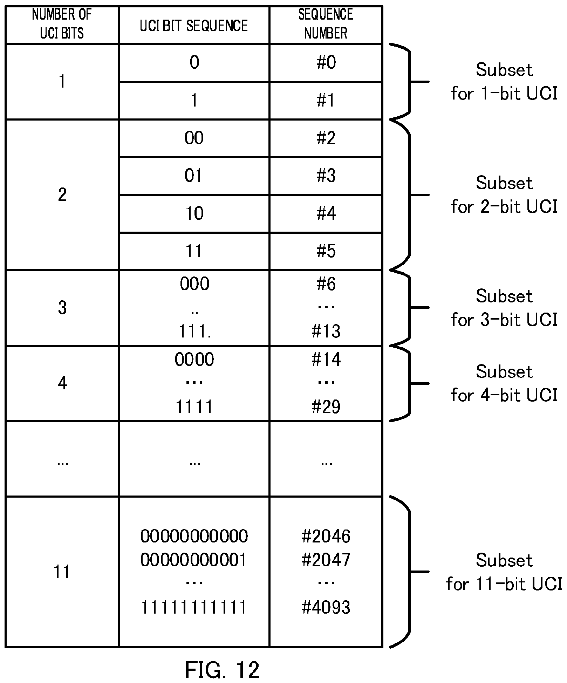

FIG. 12 illustrates exemplary associations among the number of UCI bits, the UCI bits, and the sequence number. Note that, the associations among the number of UCI bits, the UCI bits, and the sequence number are not limited to those in the example in FIG. 12, but may be other associations. In the example of FIG. 12, each subset including $2^N$ sequences is associated with each number N of UCI bits = one bit to 11 bits.

<Step 3>

Terminal 200, for example, maps the selected sequence to a PUCCH resource and transmits the selected sequence. For example, in a case where the number of resource elements included in a PUCCH resource is larger than sequence length M, terminal 200 may repeat a sequence and map the sequence to the PUCCH resource, or may extend a sequence and map the sequence to the PUCCH resource. Further, terminal 200 may apply DFT-precoding before mapping a sequence to the PUCCH resource.

Base station 100 may demodulate a received PUCCH (UCI), determine the number of UCI bits based on a subset associated with a sequence identified by the demodulation, and identify the UCI bit value based on the identified sequence.

In the example illustrated in FIG. 12, in a case where the number of UCI bits is two bits and the UCI bits are '00', terminal 200 may select sequence #2 associated with UCI bits '00' from sequences #2 to #5 included in the subset corresponding to the 2-bit UCI, map sequence #2 to a PUCCH resource, and transmit sequence #2. Further, in the example illustrated in FIG. 12, in a case where base station 100 identifies the transmission of sequence #2 as a result of the PUCCH demodulation, base station 100 identifies that the number of UCI bits is two bits, and that the UCI bits are '00'. The same applies to any other number of UCI bits and UCI bits.

[Method 2]

<Step 1>

With respect to terminal 200, a sequence pool including

[5]

$$\sum_{n=N_{min}}^{N_{max}} 2^n$$

sequences is prepared.

For example, $N_{min}$ indicates the minimum value of the number of UCI bits supported in a PUCCH transmission without using a DMRS (for example, DMRS-less PUCCH), and $N_{max}$ indicates the maximum value of the number of UCI bits supported in a PUCCH transmission without using a DMRS. The values of $N_{min}$ and $N_{max}$ may be values determined in advance in a specification. Alternatively, the values of $N_{min}$ and $N_{max}$ may be semi-static parameters configured to terminal 200 by a higher layer such as an RRC. For example, $N_{min} = 1$ or $N_{min} = 3$, or other values may be used. Further, $N_{max} = 11$ may be used, or another value may be used.

<Step 1-1>

Terminal 200 generates an orthogonal sequence pool including, for example, $N_o = N_{subcarrier} \times N_{symb}$ sequences. Here, $N_{subcarrier}$ indicates the number of subcarriers per one symbol assigned to a PUCCH resource, and $N_{symb}$ indicates the number of symbols assigned to the PUCCH resource.

$N_{subcarrier}$ cyclic shift sequences can be generated for a sequence of sequence length $N_{subcarrier}$, and further, $N_O = N_{subcarrier} \times N_{symb}$ orthogonal sequences can be generated by performing code spreading with an OCC according to number $N_{symb}$ of symbols.

<Step 1-2>

In a case where number $N_O$ of orthogonal sequences is smaller than

[6]

$$\sum_{n=N_{min}}^{N_{max}} 2^n ,$$

terminal 200 combines, for example, an orthogonal sequence(s) and a non-orthogonal sequence(s), and generates a sequence pool including

[7]

$$N_O \times N_{NO} \geq \sum_{n=N_{min}}^{N_{max}} 2^n$$

sequences. For example, the method described in NPL 8 (e.g., a method for generating a plurality of non-orthogonal sequences by varying the initial value of an M sequence) or another method may be applied to the method for generating a non-orthogonal sequence.

<Step 2>

Terminal 200 selects, according to the number of UCI bits to be generated and the UCI bit value, one sequence from a sequence pool including

[8]

$$\sum_{n=N_{min}}^{N_{max}} 2^n$$

sequences.

<Step 3>

Terminal 200, for example, maps the selected sequence to a PUCCH resource and transmits the selected sequence.

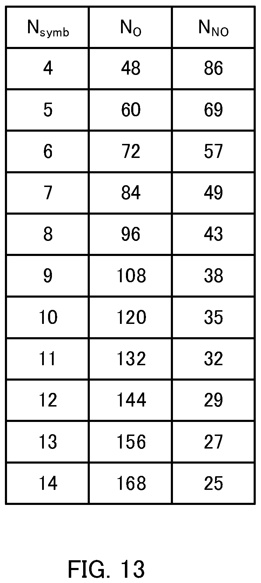

FIG. 13 illustrates an example of number $N_O$ (= 12 $N_{symb}$) of orthogonal sequences that can be generated in a case where $N_{symb}$ symbols and one resource block (12 subcarriers) are assigned and allocated to a PUCCH resource in Method 2. Further, FIG. 13 illustrates an example of number $N_{NO}$ of non-orthogonal sequences used in a sequence pool in the case of $N_{min}$ = 1 and $N_{max}$ = 11. For example, in a case where $N_{min}$ = 1 and $N_{max}$ = 11, a sequence pool including sequences which correspond to candidates for the number of UCI bits (one bit to 11 bits) and UCI bit values of each number of bits (for example, $2^N$ values for N-bit UCI), respectively, may include at least 4094 sequences. Accordingly, in FIG. 13, values of $N_{NO}$ for which $N_O \times N_{NO}$ becomes equal to or greater than 4094 with respect to each value of $N_O$ may be configured.

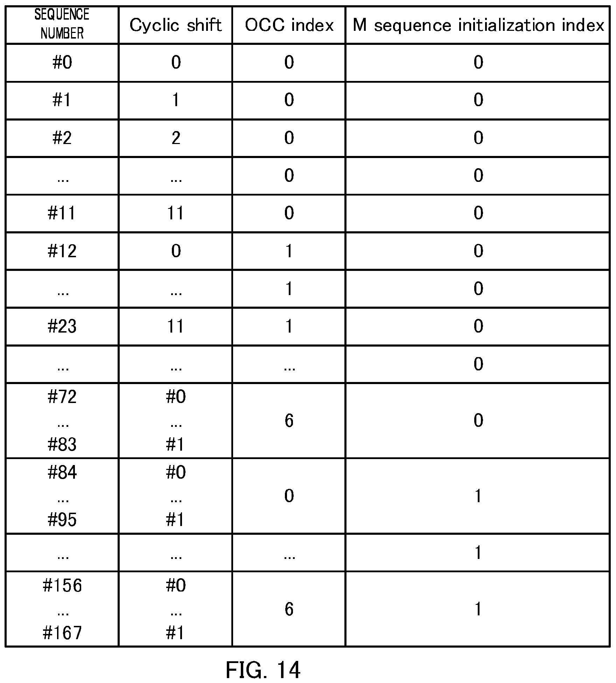

Further, FIG. 14 illustrates exemplary sequences (for example, sequences #0 to #167) that can be generated in the case of $N_{subcarrier}$ = 12, $N_{symb}$ = 14, and $N_{NO}$ = 2 in Method 2. Note that, the associations among the sequence number, the cyclic shift, the OCC index, and the non-orthogonal sequence number are not limited to those in the example illustrated in FIG. 14.

For example, a sequence pool including the sequences of sequence numbers #0 to #167 illustrated in FIG. 14 may include, in the same manner as in Method 1, a plurality of subsets each of which is associated with a candidate for the number of UCI bits, and each of the plurality of subsets may include sequences each of which is associated with a candidate for the UCI bit value. Note that, the associations among the number of UCI bits, the UCI bits, and a sequence(s) in a sequence pool may be, for example, the associations illustrated in FIG. 12 described above, or may be other associations.

Base station 100 may demodulate a received PUCCH (UCI), determine the number of UCI bits based on a subset associated with a sequence identified by the demodulation, and identify the UCI bit value based on the identified sequence.

Exemplary operations of base station 100 and terminal 200 have been described above.

As described above, in the present embodiment, terminal 200 determines, in a PUCCH transmission without using a DMRS, one sequence from a plurality of sequences according to information on the number of UCI bits and transmits the determined sequence. Further, base station 100 receives a PUCCH signal, and identifies, based on an association of information on the number of UCI bits with a sequence in a PUCCH transmission without using a DMRS, the number of UCI bits corresponding to a sequence included in the received PUCCH signal.

Thus, for example, even in a case where the number of UCI bits to be transmitted through a PUCCH assumed by base station 100 and the number of UCI bits to be transmitted through a PUCCH assumed by terminal 200 are different, base station 100 can identify the number of UCI bits based on a sequence included in the PUCCH transmitted by terminal 200. Thus, according to the present embodiment, even in a case where a discrepancy in the number of UCI bits occurs between base station 100 and terminal 200, it is possible to suppress the degradation of UCI decoding performance and improve the reception performance of a signal in a PUCCH transmission without using a DMRS.

Further, according to the present embodiment, base station 100 does not need to perform processing of decoding (for example, demodulation processing a plurality of times) UCI for which terminal 200 assumes a plurality of numbers of UCI bits considering a DCI decoding failure, which makes it possible to prevent the processing in base station 100 from becoming complicated.

(Embodiment 2)

Configurations of base station 100 and terminal 200 according to the present embodiment may be the same as the configurations in Embodiment 1.

For example, in the present embodiment, it is assumed that the minimum value of the number of UCI bits supported in a PUCCH transmission without using a DMRS is "$N_{min}$", and that the maximum value of the number of UCI bits supported in a PUCCH transmission without using a DMRS is "$N_{max}$".

For example, $N_{min}$ may be one bit, three bits which is the minimum number of UCI bits supported by PUCCH format 3, or another value other than one bit and three bits.

Further, for example, $N_{max}$ may be 11 bits which are the maximum number of UCI bits supported with a Reed Muller code in an existing PUCCH format, or may be another value other than 11 bits.

In the present embodiment, as an example, a method (for example, Method 3) for transmitting a UCI bit(s) by a combination of sequences is applied as a PUCCH transmission method without using a DMRS.

For example, a sequence pool including S sequences may be prepared.

Terminal 200 selects, for example, a plurality of sequences (for example, a combination of sequences) from a sequence pool (for example, S sequences) according to the number of UCI bits to be generated and the UCI bits. Then, terminal 200 maps the selected plurality of sequences to a PUCCH resource and transmits the selected plurality of sequences.

Here, it is assumed that the number of sequences to be selected from a sequence pool is K. For example, each combination of sequences may include K sequences from a sequence pool including S sequences. In this case, the number of combinations is $_SC_K$. For example, number S of sequences included in a sequence pool and number K of sequences to be selected may be values satisfying the following.

$$[9]$$

$$\frac{S!}{K!(S-K)!} \geq \sum_{n=N_{min}}^{N_{max}} 2^n$$

Further, in a case where different information is transmitted depending on the order in which sequences are transmitted or the order in which sequences are mapped, for example, number S of sequences included in a sequence pool and number K of sequences to be selected may be values satisfying the following.

$$[10]$$

$$\frac{S!}{(S-K)!} \geq \sum_{n=N_{min}}^{N_{max}} 2^n$$

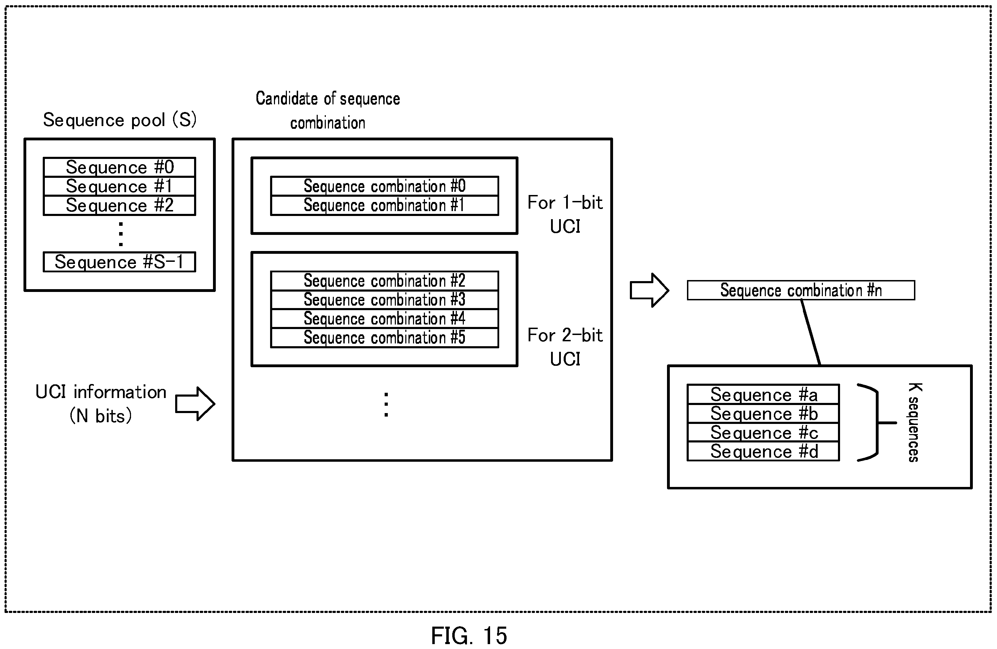

FIG. 15 illustrates an exemplary sequence pool and candidates for a combination of sequences in the present embodiment.

A candidate for a combination of sequences may be divided into subsets each of which corresponds to a candidate for the number of UCI bits. For example, each of candidates N for the number of UCI bits may be associated with $2^N$ combinations of sequences that are K sequences, and a subset may be formed of $2^N$ associated combinations of sequences. Further, each of $2^N$ combinations of sequences included in each subset may be associated with each of candidates for the value of N-bit UCI.

For example, as illustrated in FIG. 15, two (e.g.,

$2^1$) combinations of sequences may be included for one-bit UCI, and four (e.g., $2^2$) combinations of sequences may be included for two-bit UCI. In the same manner as for UCI having a different number of bits, a subset of combinations of sequences may be configured.

In a case where terminal 200 transmits N-bit UCI, for example, terminal 200 may select a subset corresponding to the N-bit UCI, and may select one combination of sequences from combinations of sequences included in the subset according to the UCI bit value.

For example, in the example of FIG. 15, terminal 200 selects a subset corresponding to the number of UCI bits from the sequence pool including S sequences, and selects sequence combination #n corresponding to the UCI bits from the selected subset. Then, terminal 200 maps K sequences (for example, sequences #a to #d) included in sequence combination #n to a PUCCH resource and transmits the K sequences.

As described above, according to the present embodiment, terminal 200 can transmit UCI bit information by a combination of sequences selected from a sequence pool. Further, terminal 200 can transmit information on the number of UCI bits by a subset to which a combination of sequences to be selected belongs.

Further, base station 100 can, for example, demodulate a PUCCH, determine which combination of sequences has been transmitted, and identify a subset to which the combination of sequences belongs, thereby identifying the number of UCI bits that terminal 200 has transmitted.

Thus, for example, even in a case where terminal 200 fails in DCI decoding, base station 100 can identify, in addition to the UCI bits transmitted by terminal 200, the number of UCI bits accurately, based on the received sequence of UCI, and thus, the discrepancy in the number of UCI bits between base station 100 and terminal 200 can be suppressed.

Hereinafter, an example in which the PUCCH transmission method according to the present embodiment is applied to Method 3 using sequence selection will be described.

[Method3]

<Step 1>

With respect to terminal 200, a sequence pool including S sequences is prepared.

Here, for example, the sequence length is denoted as M in the same manner as in Method 1. Sequence length M may be, for example, a predetermined value in a specification, such as 12, 24, 48, or the like, or may be a semi-static parameter configured to terminal 200 by a higher layer such as an RRC. Alternatively, the sequence may be generated by a combination of a cyclic shift and an OCC in the same manner as in Method 2, for example.

<Step 2>

Terminal 200 selects K sequences (e.g., a combination of sequences) from S sequences according to the number of UCI bits to be generated and the UCI bit value, for example. Alternatively, terminal 200 may select, for example, according to the number of UCI bits to be generated, a subset corresponding to the number of UCI bits, and may select one combination of sequences from the selected subset according to the value of the UCI bits.

Here, the values of S and K may be values satisfying the following.

$$[11]$$

$$\frac{S!}{K!(S-K)!} \geq \sum_{n=N_{min}}^{N_{max}} 2^n$$

Further, when different information is transmitted depending on the order in which sequences are transmitted or the order in which sequences are mapped, the values of S and K may be values satisfying the following.

$$[12]$$

$$\frac{S!}{(S-K)!} \geq \sum_{n=N_{min}}^{N_{max}} 2^n$$

For example, $N_{min}$ indicates the minimum value of the number of UCI bits supported in a PUCCH transmission without using a DMRS and $N_{max}$ indicates the maximum value of the number of UCI bits supported in a PUCCH transmission without using a DMRS. For example, $N_{min}$ may be one bit, three bits, or another value other than one bit and three bits. Further, for example, $N_{max}$ may be 11 bits, or another value other than 11 bits. The values of $N_{min}$ and $N_{max}$ may be determined in advance in a standard, or may be semi-static parameters configured to terminal 200 by a higher layer such as an RRC.

The values of S and K may be determined in advance in a standard, or may be semi-static parameters configured to terminal 200 by a higher layer such as an RRC.

<Step 3>

Terminal 200 maps a sequence(s) included in the selected combination of sequences to a PUCCH resource and transmits the sequence(s), for example. For example, when terminal 200 selects and transmits K sequences, a PUCCH resource may be divided into K subresources, and one sequence may be mapped to each subresource.

In addition, for example, in the case of sequence length M, when the number of resource elements included in a subresource is larger than M, terminal 200 may repeat a sequence and map the sequence to a subresource, or may extend a sequence and map the sequence to a subresource. Further, terminal 200 may apply DFT-precoding, for example, before mapping a sequence to a PUCCH resource.

Base station 100 may demodulate a received PUCCH (UCI), determine the number of UCI bits based on a subset associated with a combination of sequences identified by the demodulation, and identify the UCI bit value based on the identified combination of sequences.

As described above, in the present embodiment, terminal 200 determines, in a PUCCH transmission without using a DMRS, one combination from a plurality of combinations of sequences according to information on the number of UCI bits, and transmits a sequence included in the determined combination. Further, base station 100 receives a PUCCH signal, and identifies, based on an association of information on the number of UCI bits with a combination of sequences in a PUCCH transmission without using a DMRS, the number of UCI bits included in the received PUCCH signal.

Thus, for example, even in a case where the number of UCI bits to be transmitted through a PUCCH assumed by base station 100 and the number of UCI bits to be transmitted through a PUCCH assumed by terminal 200 are different, base station 100 can identify the number of UCI bits based on a combination of sequences included in the PUCCH transmitted by terminal 200. Thus, according to the present embodiment, even in a case where a discrepancy in the number of UCI bits occurs between base station 100 and terminal 200, it is possible to suppress the degradation of UCI decoding performance and improve the reception performance of a signal in a PUCCH transmission without using a DMRS.

Further, according to the present embodiment, base station 100 does not need to perform processing of decoding (for example, demodulation processing a plurality of times) UCI for which terminal 200 assumes a plurality of numbers of UCI bits considering a DCI decoding failure, which makes it possible to prevent the processing in base station 100 from becoming complicated.

The embodiments according to a non-limiting example of the present disclosure have been each described, thus far.

(Variation 1)

In a non-limiting embodiment of the present disclosure, terminal 200 transmits information on the number of UCI bits, for example, by sequence selection (for example, Embodiment 1) or sequence combination selection (for example, Embodiment 2).

Here, for example, it is assumed that the minimum value of the number of UCI bits supported in a PUCCH transmission without using a DMRS is "$N_{min}$", and that the maximum value of the number of UCI bits supported in a PUCCH transmission without using a

DMRS is "$N_{max}$".

In this case, the information on the number of UCI bits corresponds to ($N_{max}$ - $N_{min}$ + 1) subsets in a sequence pool in Embodiment 1, and corresponds to ($N_{max}$ - $N_{min}$ + 1) subsets in a candidate for a combination of sequences in Embodiment 2.

In Variation 1, for example, among a plurality of sequences included in a sequence pool, sequences included in different subsets each of which corresponds to information on the number of UCI bits are caused to correspond to a sequence with higher reliability. Alternatively, for example, sequences included in combinations of sequences, which correspond to different numbers of UCI bits (for example, different n-s), are caused to correspond to a sequence with higher reliability.

For example, in Method 2, different orthogonal sequences may be caused to correspond to subsets. For example, in Method 2 according to Embodiment 1, $N_O$ orthogonal sequences may be sorted into ($N_{max}$ - $N_{min}$ + 1) subsets. For example, $N_O$ orthogonal sequences may be dispersedly allocated to ($N_{max}$ - $N_{min}$ + 1) subsets, respectively.

For example, when the number of orthogonal sequences to be sorted into a subset corresponding to n-bit UCI is denoted as "$N_{o,n}$", the following may be satisfied.

[13]

$$\sum_{n=N_{min}}^{N_{max}} N_{O,\,n} \leq N_O$$

Further, for example, in a case where number $N_{o,n}$ of orthogonal sequences included in a subset corresponding to UCI bits of n bits is smaller than 2", $N_{O,n} \times N_{NO,n} \geq 2^N$ sequences may be generated in the subset by combining at least one of the orthogonal sequences and a non-orthogonal sequence(s).

Further, in Method 3 according to Embodiment 2, different orthogonal sequences may be caused to correspond to subsets corresponding to candidates for combinations of sequences. For example, in Method 3 according to Embodiment 2, a plurality of orthogonal sequences may be sorted into ($N_{max}$ - $N_{min}$ + 1) subsets. For example, a plurality of orthogonal sequences may be dispersedly allocated to ($N_{max}$ - $N_{min}$ + 1) subsets in combinations of sequences, respectively, which correspond to different numbers n of UCI bits, respectively.

According to Variation 1, different orthogonal sequences are used between subsets, and thus, it is easier to maintain orthogonality between the subsets. Thus, according to Variation 1, it is possible to improve the reliability of information on the number of UCI bits and contribute to improving the UCI demodulation performance.

Further, on the reception side (for example, base station 100), an orthogonal sequence(s) may be first identified as an implementation method for demodulating sequences in which an orthogonal sequence(s) and a non-orthogonal sequence(s) are combined. In this case, by performing subset identification starting from an orthogonal sequence(s) on the reception side, the number of sequences to be searched during the demodulation can be reduced, and the demodulation processing can be simplified.

(Variation 2)

In Method 2 according to Embodiment 1, an orthogonal sequence pool including $N_O$ = $N_{subcarrier}$ × $N_{symb}$ sequences is generated. Here, $N_{subcarrier}$ indicates the number of subcarriers per one symbol assigned to a PUCCH resource, and $N_{symb}$ indicates the number of symbols assigned to a PUCCH resource. $N_{subcarrier}$ cyclic shift sequences can be generated for a sequence of sequence length $N_{subcarrier}$, and further, $N_O$ = $N_{subcarrier}$ × $N_{symb}$ orthogonal sequences can be generated by performing code spreading with an OCC according to number $N_{symb}$ of symbols.

Further, in Method 2 according to Embodiment 1, for example, in a case where number $N_O$ of orthogonal sequences is smaller than

[14]

$$\sum_{n=N_{min}}^{N_{max}} 2^n,$$

[15]

$$N_O \times N_{NO} \geq \sum_{n=N_{min}}^{N_{max}} 2^n$$

sequences are generated by combining an orthogonal sequence(s) and a non-orthogonal sequence(s).

In Variation 2, for example, the number of available orthogonal sequences (for example, the upper limit of the number of orthogonal sequences) may be configured (for example, limited) to be a power of two. For example, the number of orthogonal sequences included in a sequence pool may be a power of two.

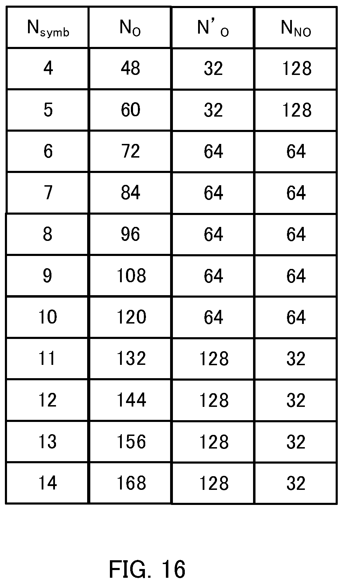

For example, number $N_O$ of orthogonal sequences that can be generated in a case where $N_{symb}$ symbols and one resource block (12 subcarriers) are assigned and allocated to a PUCCH resource is given as illustrated in FIG. 16.

At this time, the number of available orthogonal sequences for each number $N_{symb}$ of PUCCH symbols may be configured (for example, limited) to value $N'_O$ that is equal to or less than $N_O$ and a power of two. The examples in FIG. 16 illustrate, in Method 2 according to Variation 2, examples of the number of orthogonal sequences ($N_O$ and $N'_O$) that can be generated in a case where $N_{symb}$ symbols and one resource block (12 subcarriers) are assigned and allocated to a PUCCH resource, and examples of number $N'_O$ of orthogonal sequences and number $N_{NO}$ of non-orthogonal sequences that can be utilized for a sequence pool in the case of $N_{min}$ = 1 and $N_{max}$ = 11.

In Variation 2, for example, the first ($\log_2 N'_O$) bit of a UCI bit sequence may be assigned (or mapped) to an orthogonal sequence, and the remaining UCI bits may be assigned (or may be mapped) to a non-orthogonal sequence. Thus, in Variation 2, it is possible to divide a UCI bit sequence into a bit sequence corresponding to an orthogonal sequence and a bit sequence corresponding to a non-orthogonal sequence. For this reason, there is an advantage that the processing of mapping a UCI bit(s) to a sequence on the transmission side (for example, terminal 200) and the demodulation processing on the reception side (for example, base station 100) can be simplified.

Further, as illustrated in FIG. 16, the numbers of non-orthogonal sequences used in each number of PUCCH symbols can be configured to be the same value among a plurality of numbers $N_{symb}$ of PUCCH symbols, rather than to values different from each other. Therefore, the non-orthogonal sequences can be designed easily.

Note that, Variation 2 is not limited to Method 2 and may be applied to Method 1. For example, the number of orthogonal sequences included in the sequence pool of Method 1 may be configured to be a power of two.

Variation 2 has been described, thus far.

(Other Embodiments)

(1) For example, Repetition in which a PUCCH is transmitted over a plurality of slots may be applied in order to improve the PUCCH coverage.

As a Repetition application method for the PUCCH transmission method without using a DMRS described above, a method of simply repeatedly transmitting a PUCCH (for example, a signal for one slot) without using a DMRS, which is generated by the method described above, over a plurality of slots is conceivable, for example.

Further, as a Repetition method, for example, Repetition in a slot unit or a mini-slot unit (for example, non-contiguous symbol Repetition) adopted in NR may be applied, or Repetition in a symbol unit in which the same OFDM symbol is continuously transmitted may be applied. The former is expected to improve the accuracy of residual frequency offset estimation from the fact that the same symbol is transmitted as a non-contiguous symbol. Further, the received SNR can be improved in the latter since it is easy to in-phase combine symbols to be continuously transmitted with each other.

Further, since a PUCCH resource (for example, the number of symbols) in the time domain increases by Repetition, the number of symbols or the number of resource elements included in a PUCCH resource in the embodiments described above may be replaced with the number of symbols or the number of resource elements in a PUCCH resource including Repetition (for example, for a plurality of slots).

Further, for example, in <Step 1-1> in Method 2 according to Embodiment 1, an orthogonal sequence pool including $N_O = N_{subcarrier} \times N_{symb} \times N_{Rep}$ sequences may be generated. Here, $N_{subcarrier}$ represents the number of subcarriers per one symbol assigned to a PUCCH resource, $N_{symb}$ represents the number of symbols assigned to a PUCCH resource, and $N_{Rep}$ represents the number of Repetitions.

For example, $N_{subcarrier}$ cyclic shift sequences can be generated for a sequence of sequence length $N_{subcarrier}$, and $N_O = N_{subcarrier} \times N_{symb} \times N_{Rep}$ orthogonal sequences can be generated by performing code spreading with an OCC according to number $N_{symb}$ of symbols and number $N_{Rep}$ of Repetitions.

(2) The sequence in the non-limiting embodiment of the present disclosure may not be a sequence that is actually transmitted, and may be, for example, a logical sequence.

For example, the mapping between a sequence that is actually transmitted and a logical sequence may be the same or different between terminals 200. For example, an association of sequence number n, which is logical, with sequence number m, which is actually transmitted, may be determined based on a parameter configured in a higher layer such as RRC, or may be determined based on a terminal ID or a cell ID.

(3) In Method 2 according to Embodiment 1, frequency resource selection may be introduced in addition to the sequence selection corresponding to UCI.

For example, as a PUCCH transmission method without using a DMRS, sequence selection may be applied as follows.

<Step 1>

As the number of sequences included in a sequence pool used for sequence selection,

[16]

$$\sum_{n=N_{min}}^{N_{max}} 2^n \quad \text{or} \quad \sum_{n=N_{min}}^{N_{max}} 2^n$$

or more
sequences are prepared.

<Step 1-1>

Terminal 200 generates an orthogonal sequence pool including, for example, $N_o = N_{subcarrier} \times N_{symb}$ sequences. Here, $N_{subcarrier}$ indicates the number of subcarriers per one symbol assigned to a PUCCH resource, and $N_{symb}$ indicates the number of symbols assigned to a PUCCH resource.

For example, $N_{subcarrier}$ cyclic shift sequences can be generated for a sequence of sequence length $N_{subcarrier}$, and further, $N_O = N_{subcarrier} \times N_{symb}$ orthogonal sequences can be generated by performing code spreading with an OCC according to number $N_{symb}$ of symbols.

<Step 1-2>

In a case where number $N_O$ of orthogonal sequences is smaller than

[17]

$$\sum_{n=N_{min}}^{N_{max}} 2^n ,$$

for example, resource block selection may be applied.

In the resource block selection, for example, M resource blocks are reserved as a frequency domain resource for a PUCCH, and terminal 200 selects one resource block from the M resource blocks. For example, in a case where M resource blocks are reserved, $N'_O = N_{subcarrier} \times N_{symb} \times M$ combinations of orthogonal sequences and resource block selections can be realized. For example,

[18]

$$N'_O \geq \sum_{n=N_{min}}^{N_{max}} 2^n$$

candidates for combinations may be generated by combining orthogonal sequences and resource block selections.

<Step 2>

Terminal 200 selects one (for example, one sequence and one resource block) from

[19]

$$\sum_{n=N_{min}}^{N_{max}} 2^n$$

candidates for combinations of orthogonal sequences and resource block selections according to, for example, the number of UCI bits to be generated and the UCI bit value.

<Step 3>

Terminal 200, for example, maps the selected sequence to the selected resource block in the PUCCH resource.

For example, base station 100 may demodulate a PUCCH and identify a UCI bit(s) based on a combination of a sequence used for the UCI transmission and a resource block used for the sequence transmission.

According to this method, it is possible to avoid the use of a non-orthogonal sequence while maintaining narrowband transmission of one resource block, and thus, an improvement in the PUCCH coverage performance can be expected.

(4) In Method 2 according to Embodiment 1, frequency resource selection may be introduced in addition to the sequence selection corresponding to UCI.

For example, as a PUCCH transmission method without using a DMRS, sequence selection may be applied as follows.

<Step 1>

As the number of sequences included in a sequence pool used for sequence selection,

[20]

$$\sum_{n=N_{min}}^{N_{max}} 2^n \qquad \text{or} \qquad \sum_{n=N_{min}}^{N_{max}} 2^n$$

or more
sequences are prepared.

<Step 1-1>

Terminal 200 generates an orthogonal sequence pool including, for example, $N_O = N_{subcarrier} \times N_{symb}$ sequences. Here, $N_{subcarrier}$ indicates the number of subcarriers per one symbol assigned to a PUCCH resource, and $N_{symb}$ indicates the number of symbols assigned to a PUCCH resource. Note that, $N_{symb}$ may be, for example, $N_{symb}^{HP}$ or $N_{symb}^{LP}$.

For example, $N_{subcarrier}$ cyclic shift sequences can be generated for a sequence of sequence length $N_{subcarrier}$, and further, $N_O = N_{subcarrier} \times N_{symb}$ orthogonal sequences can be generated by performing code spreading with an OCC according to number $N_{symb}$ of symbols.

<Step 1-2>

In a case where number $N_O$ of orthogonal sequences is smaller than

[21]

$$\sum_{n=N_{min}}^{N_{max}} 2^n ,$$

for example, comb-index selection may be applied.

In the comb-index selection, for example, K resource blocks are reserved as a frequency domain resource for a PUCCH, and terminal 200 selects a comb-shaped subcarrier (for example, comb-index) in each resource block. For example, each resource block may be divided into K combs. For example, when one resource block is configured with 12 subcarriers, comb-index #n (n = 0 to K - 1) may be configured with subcarriers #n, #n + K, to #n + (12/K - 1)K.

For example, in a case where K resource blocks are reserved and a resource block is divided into K combs, $N'_O = N_{subcarrier} \times N_{symb} \times K$ combinations of orthogonal sequences and comb-index selections can be realized. For example,

[22]

$$N'_O \geqq \sum_{n=N_{min}}^{N_{max}} 2^n$$

candidates for combinations may be generated by combining orthogonal sequences and comb-index selections.

<Step 2>

Terminal 200 selects one (for example, one sequence and one comb-index) from

[23]

$$\sum_{n=N_{min}}^{N_{max}} 2^n$$

candidates for combinations of orthogonal sequences and comb-index selections, for example, according to the number of UCI bits to be generated and the UCI bit value.

<Step 3>

Terminal 200, for example, maps the selected sequence to a subcarrier corresponding to the comb-index selected in Step 2 in a PUCCH resource, and transmits the selected sentence.

For example, base station 100 may demodulate a PUCCH and identify a UCI bit(s) based on a combination of a sequence used for the UCI transmission and a comb (subcarrier) used for the sequence transmission.

According to this method, the number of subcarriers for transmitting a signal is subcarriers for one resource block (for example, 12 subcarriers), and thus, it is possible to avoid the use of a non-orthogonal sequence while maintaining the same power spectrum density (PSD) as that in narrowband transmission, and thus, an improvement in PUCCH coverage performance can be expected.

Further, in comparison with another embodiment (3), a signal is assigned over the entire resource block allocated to a PUCCH resource, and thus, there is an advantage that interference control between cells becomes relatively simple.

(5) In another embodiment (3), a case where when number $N_O$ of orthogonal sequences is smaller than

[24]

$$\sum_{n=N_{min}}^{N_{max}} 2^n,$$

the resource block selection is applied, and the PUCCH frequency domain resource to be used in the resource block selection is M resource blocks satisfying

[25]

$$N'_O = N_{subcarrier} \times N_{symb} \times M \geq \sum_{n=N_{min}}^{N_{max}} 2^n$$

has been described.

Further, in another embodiment (4), a case where when number $N_O$ of orthogonal sequences is smaller than

[26]

$$\sum_{n=N_{min}}^{N_{max}} 2^n,$$

the comb-index selection is applied, and the PUCCH frequency domain resource to be used in the comb-index selection is K resource blocks satisfying

[27]

$$N'_O = N_{subcarrier} \times N_{symb} \times K \geq \sum_{n=N_{min}}^{N_{max}} 2^n$$

has been described.

In another embodiment (3) or (4), as the number of UCI bits to be supported increases, the frequency resources to be used also increase, and thus, the spectral efficiency may be degraded.

Accordingly, in another embodiment (5), the upper limit of the amount of available PUCCH frequency domain resources (for example, the number of resource blocks) may be configured (for example, limited).

For example, the number of available resource blocks may be 16 resource blocks, which can be supported by an existing PUCCH format, or may be another value.

For example, in a case where number $N'_O$ of combinations of orthogonal sequences and resource block selections (or comb-index selections) that can be generated in <Step 1-2> in another embodiment (3) or (4) described above is smaller than

[28]

$$\sum_{n=N_{min}}^{N_{max}} 2^n,$$

terminal 200 may combine, for example, a non-orthogonal sequence(s) therewith and generate

[29]

$$N_O' \times N_{NO} \geq \sum_{n=N_{min}}^{N_{max}} 2^n$$

combinations. Note that, for example, the method described in NPL 8 (e.g., a method for generating a plurality of non-orthogonal sequences by varying the initial value of an M sequence) or another method may be applied to the method for generating a non-orthogonal sequence.

According to this method, in addition to orthogonal and non-orthogonal sequences, the application of frequency resource selection makes it possible to significantly reduce the number of non-orthogonal sequences, for example, as compared to FIG. 13, and thus, it is possible to suppress the deterioration in transmission performance due to the use of a non-orthogonal sequence. Further, since the amount of available PUCCH frequency domain resources can be limited, it is possible to improve spectral efficiency.

(6) In Step 1 of other embodiments (3) to (5) described above, a case where orthogonal sequences are generated in Step 1-1, the resource block selection (or the comb-index selection) is applied in Step 1-2, and a combination of an orthogonal sequence and a resource block (or a comb-index) is generated has been described.

The combination generation method (for example, the order of processing) is not limited to the above-described method. For example, in Step 1-1, the resource block selection (or the comb-index selection) may be applied, and in Step 1-2, orthogonal sequences may be generated.

<Step 1-1>

For example, M resource blocks are reserved as a frequency domain resource for a PUCCH, and terminal 200 generates M candidates for resource block selections. Alternatively, K resource blocks are reserved as a frequency domain resource for a PUCCH, and terminal 200 generates K candidates for comb-index selections.

<Step 1-2>

In a case where M (or K) is smaller than

[30]

$$\sum_{n=N_{min}}^{N_{max}} 2^n,$$

terminal 200 generates an orthogonal sequence pool including, for example, $N_O = N_{subcarrier} \times N_{symb}$ sequences. Here, $N_{subcarrier}$ indicates the number of subcarriers (for example, 12 subcarriers) per one symbol assigned to a PUCCH resource, and $N_{symb}$ indicates the number of symbols assigned to a PUCCH resource.

For example, $N_{subcarrier}$ cyclic shift sequences can be generated for a sequence of sequence length $N_{subcarrier}$, and further, $N_O = N_{subcarrier} \times N_{symb}$ orthogonal sequences can be generated by performing code spreading with an OCC according to number $N_{symb}$ of symbols.

For example, $N'_O = M \times N_{subcarrier} \times N_{symb}$ combinations of resource block selections and orthogonal sequences can be realized. Further, $N'_O = K \times N_{subcarrier} \times N_{symb}$ combinations of comb-index selections and orthogonal sequences can be realized.

<Step 1-3>

In a case where number $N'_O$ of candidates for combinations generated in Step 1-2 is smaller than

[31]

$$\sum_{n=N_{min}}^{N_{max}} 2^n,$$

terminal 200 may combine, for example, a non-orthogonal sequence(s) therewith and generate

[32]

$$N_O' \times N_{NO} \geq \sum_{n=N_{min}}^{N_{max}} 2^n$$

combinations. Note that, for example, the method described in NPL 8 (e.g., a method for generating a plurality of non-orthogonal sequences by varying the initial value of an M sequence) or another method may be applied to the method for generating a non-orthogonal sequence.

(7) In another embodiment (4) described above, the comb-index selection between K resource blocks has been assumed to be the same, but the present disclosure is not limited to this.

For example, UCI bit transmission is possible with a combination of comb-index selection for each resource block. For example, in PUCCH transmission of M resource blocks including K comb-indexes, the number of combinations of comb-index selections for each resource block is $K^M$. Accordingly, for example, it is possible to realize combinations of $N'_O = N_{subcarrier} \times N_{symb} \times K^M$ orthogonal sequences and comb-index selections.

Further, for example, UCI bit transmission is possible with a combination of comb-index selection between symbols. For example, in PUCCH transmission of M resource blocks including K comb-indexes and $N_{symb}$ symbols, the number of combinations of comb-index selections for each symbol is $K^{Nsymb}$. Accordingly, for example, it is possible to realize $N'_O = N_{subcarrier} \times N_{symb} \times K^{Nsymb}$ combinations of orthogonal sequences and comb-index selections.

Note that, even in another embodiment (3), UCI bit transmission is possible with a combination of resource block selection between $N_{symb}$ symbols.

Further, for example, comb-index selection between resource blocks and comb-index selection between symbols may be combined and used. In that case, it is possible to realize $N'_O = N_{subcarrier} \times N_{symb} \times K^M \times K^{Nsymb}$ combinations of orthogonal sequences and comb-index selections.

According to these methods, terminal 200 can transmit a UCI bit(s) by using a combination of comb-index selection between resource blocks or between symbols, thereby reducing the use of a non-orthogonal sequence. Further, it is possible to reduce PUCCH frequency resources and improve the spectral efficiency.

The other embodiments have been described, thus far.

Note that, UCI multiplexing transmission in a PUCCH has been described in the embodiments described above, but the channel used for the multiplexing transmission is not limited to PUCCH, and may be other channels. Further, the type of information to be transmitted is not limited to UCI, but may be information of other types (e.g., uplink data signal). Further, an exemplary embodiment of the present disclosure is not limited to the uplink transmission, but may be applied to downlink transmission or sidelink transmission.

Further, the parameters such as the number of subcarriers, the number of resource blocks, the number of symbols, the number of orthogonal sequences, the number of non-orthogonal sequences, and the number of UCI bits supported in a PUCCH transmission, which have been exemplified in the present disclosure, are merely examples, and may be other values.

Further, in the present disclosure, Repetition may also be referred to as, for example, slot aggregation, slot bundling, TTI aggregation, or TTI bundling.

The present disclosure may be applied to, for example, communication between terminals, such as sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by a DCI that is physical layer signaling.

(Complement)

Information indicating whether terminal 200 supports the functions, operations, or pieces of processing that have been indicated in the above-mentioned embodiments, variations, and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

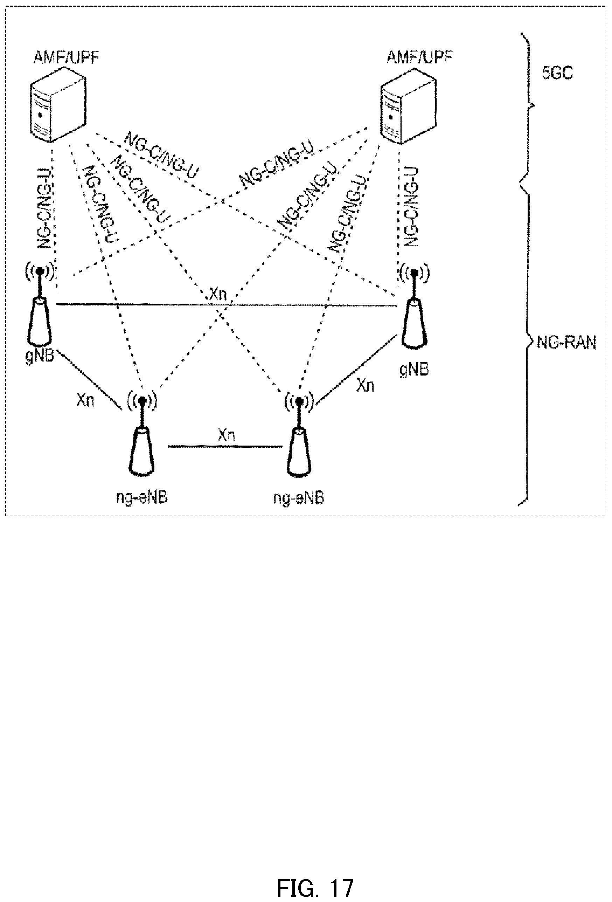

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 17 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

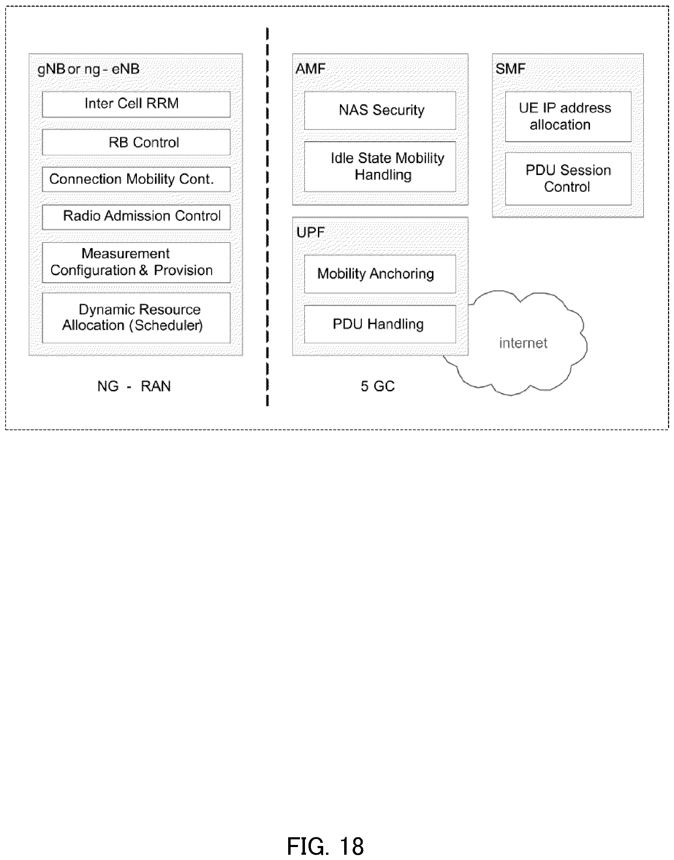

FIG. 18 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;

- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

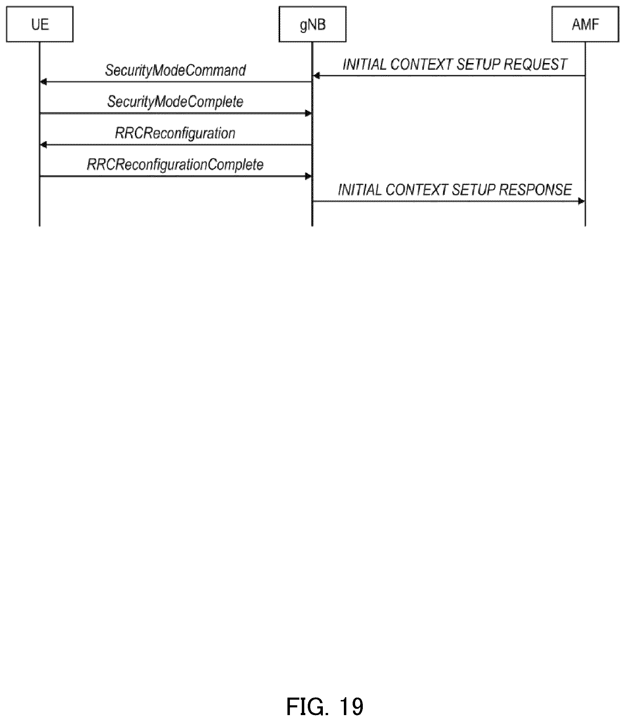

FIG. 19 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

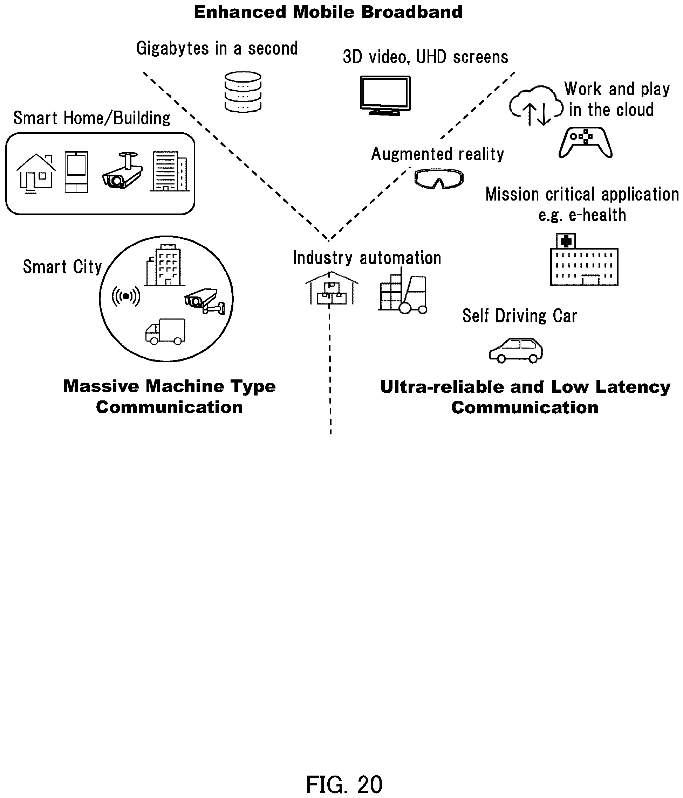

FIG. 20 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 20 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on

frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 19. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

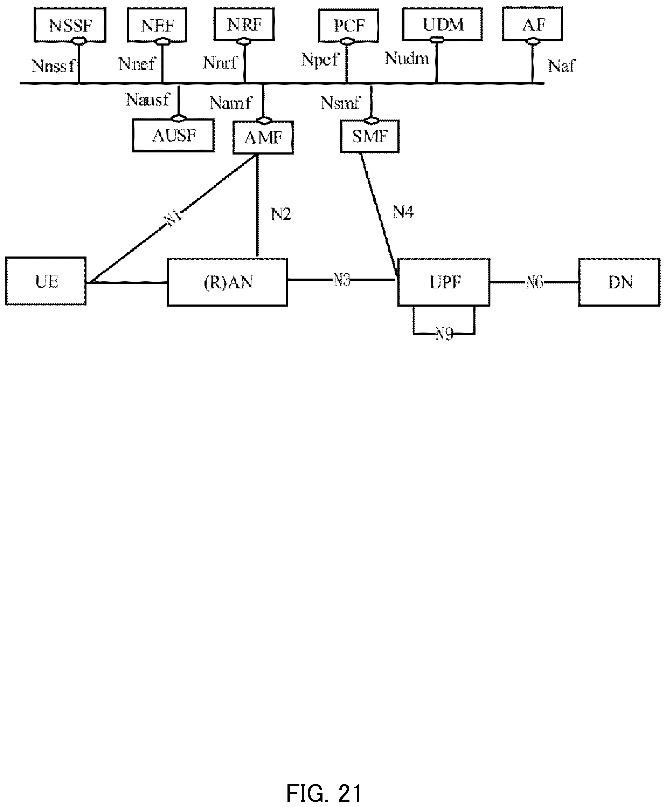

FIG. 21 illustrates a 5G NR non-roaming reference architecture (see TS 23.501 v16.1.0, section 4.23). An Application Function (AF) (e.g., an external application server hosting 5G services, exemplarily described in FIG. 20) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 21 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: control circuitry, which, in operation, determines one sequence or one combination from a plurality of sequences or a plurality of combinations of sequences according to information on a number of information bits in an uplink transmission without using a reference signal; and transmission circuitry, which, in operation, transmits the one sequence or a sequence included in the one combination, in the uplink transmission without using the reference signal.

In an exemplary embodiment of the present disclosure, a sequence pool including the plurality of sequences includes

[33]

$$\sum_{n=N_{min}}^{N_{max}} 2^n$$

or more sequences, where $N_{min}$ is a minimum value of the number of the information bits supported in the uplink transmission, and $N_{max}$ is a maximum value of the number of the information bits supported in the uplink transmission.

In an exemplary embodiment of the present disclosure, the sequence pool includes a plurality of subsets each of which is associated with a candidate for the number of the information bits, and each of the plurality of subsets includes a plurality of sequences each of which is associated with a candidate for a value of the information bits, and the control circuitry selects one sequence from the plurality of subsets according to information on the number of the information bits and selects the one sequence from the one subset according to the value of the information bits.

In an exemplary embodiment of the present disclosure, among the plurality of sequences included in the sequence pool, the plurality of sequences included in the plurality of subsets correspond to a sequence with higher reliability, where the plurality of subset is different from each other.

In an exemplary embodiment of the present disclosure, a plurality of orthogonal sequences is dispersedly allocated to ($N_{max}$ - $N_{min}$ + 1) subsets, respectively.

In an exemplary embodiment of the present disclosure, in a case where a number of the plurality of orthogonal sequences included in one of the subsets, which corresponds to the information bits of n bits, is smaller than $2^n$, $2^n$ sequences are generated in the one of the subsets by using at least one of the plurality of orthogonal sequences and at least one non-orthogonal sequence.

In an exemplary embodiment of the present disclosure, a number of orthogonal sequences included in the sequence pool is a power of two.

In an exemplary embodiment of the present disclosure, each of the plurality of combinations includes K sequences in a sequence pool including S sequences. S and K are values satisfying

[34]

$$\frac{S}{K!(S-K)!} \geq \sum_{n=N_{min}}^{N_{max}} 2^n \quad \text{or} \quad \frac{S}{(S-K)!} \geq \sum_{n=N_{min}}^{N_{max}} 2^n ,$$

where $N_{min}$ is a minimum value of the number of the information bits supported in the uplink transmission, and $N_{max}$ is a maximum value of the number of the information bits supported in the uplink transmission.

In an exemplary embodiment of the present disclosure, each candidate n for the number of the information bits is associated with $2^n$ combinations of a plurality of sequences, which is the K sequences, each of the $2^n$ sequences is associated with a candidate for a value of the information bits, and the control circuitry selects the K sequences from the S sequences according to the number of the information bits and the value of the information bits.

In an exemplary embodiment of the present disclosure, a plurality of sequences included in a plurality of combinations of the plurality of sequences, where the plurality of combinations of the plurality of sequences corresponding to a plurality of the n-s that are different from each other, corresponds to a sequence with higher reliability.

In an exemplary embodiment of the present disclosure, a plurality of orthogonal sequences is dispersedly allocated to $(N_{max} - N_{min} + 1)$ sets in the plurality of combinations of the plurality of sequences, respectively, where the $(N_{max} - N_{min} + 1)$ sets correspond to the plurality of different n-s, respectively.

A base station according to an exemplary embodiment of the present disclosure includes: reception circuitry, which, in operation, receives a signal; and control circuitry, which, in operation, identifies, based on an association of information on a number of information bits with a sequence or a combination of sequences in an uplink transmission without using a reference signal, the number of the information bits corresponding to a sequence included in the signal.

A communication method according to an exemplary embodiment of the present disclosure includes: determining, by a terminal, one sequence or one combination from a plurality of sequences or a plurality of combinations of sequences according to information on a number of information bits in an uplink transmission without using a reference signal; and transmitting, by the terminal, the one sequence or a sequence included in the one combination, in the uplink transmission without using the reference signal.

A communication method according to an exemplary embodiment of the present disclosure includes: receiving, by a base station, a signal; and identifying, by the base station, based on an association of information on a number of information bits with a sequence or a combination of sequences in an uplink transmission without using a reference signal, the number of the information bits corresponding to a sequence included in the signal.

The disclosure of Japanese Patent Application No. 2022-049007, filed on March 24, 2022, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A terminal, comprising:

    control circuitry, which, in operation, determines one sequence or one combination from a plurality of sequences or a plurality of combinations of sequences according to information on a number of information bits in an uplink transmission without using a reference signal; and transmission circuitry, which, in operation, transmits the one sequence or a sequence included in the one combination, in the uplink transmission without using the reference signal.

2. The terminal according to claim 1, wherein a sequence pool including the plurality of sequences includes

    $$[1]$$

    $$\sum_{n=N_{min}}^{N_{max}} 2^n$$

    or more sequences, where $N_{min}$ is a minimum value of the number of the information bits supported in the uplink transmission, and $N_{max}$ is a maximum value of the number of the information bits supported in the uplink transmission.

3. The terminal according to claim 2, wherein:

    the sequence pool includes a plurality of subsets each of which is associated with a candidate for the number of the information bits, and each of the plurality of subsets includes a plurality of sequences each of which is associated with a candidate for a value of the information bits, and the control circuitry selects one sequence from the plurality of subsets according to information on the number of the information bits and selects the one sequence from the one subset according to the value of the information bits.

4. The terminal according to claim 3, wherein among the plurality of sequences included in the sequence pool, the plurality of sequences included in the plurality of subsets correspond to a sequence with higher reliability, the plurality of subset being different from each other.

5. The terminal according to claim 4, wherein a plurality of orthogonal sequences is dispersedly allocated to $(N_{max} - N_{min} + 1)$ subsets, respectively.

6. The terminal according to claim 5, wherein in a case where a number of the plurality of orthogonal sequences included in one of the subsets is smaller than $2^n$, $2^n$ sequences are generated in the one of the subsets by using at least one of the plurality of orthogonal sequences and at least one non-orthogonal sequence, the one of the subsets corresponding to the information bits of n bits.

7. The terminal according to claim 2, wherein a number of orthogonal sequences included in the sequence pool is a power of two.

8. The terminal according to claim 1, wherein each of the plurality of combinations includes K sequences in a sequence pool including S sequences, S and K being values satisfying

[2]

$$\frac{S!}{K!(S-K)!} \geq \sum_{n=N_{min}}^{N_{max}} 2^n \quad \text{or} \quad \frac{S!}{(S-K)!} \geq \sum_{n=N_{min}}^{N_{max}} 2^n$$
,

where $N_{min}$ is a minimum value of the number of the information bits supported in the uplink transmission, and $N_{max}$ is a maximum value of the number of the information bits supported in the uplink transmission.

9. The terminal according to claim 8, wherein:

each candidate n for the number of the information bits is associated with $2^n$ combinations of a plurality of sequences, and each of the $2^n$ sequences is associated with a candidate for a value of the information bits, the plurality of sequences being the K sequences, and the control circuitry selects the K sequences from the S sequences according to the number of the information bits and the value of the information bits.

10. The terminal according to claim 9, wherein a plurality of sequences included in a plurality of combinations of the plurality of sequences corresponds to a sequence with higher reliability, the plurality of combinations of the plurality of sequences corresponding to a plurality of the n-s that are different from each other.

11. The terminal according to claim 10, wherein a plurality of orthogonal sequences is dispersedly allocated to $(N_{max} - N_{min} + 1)$ sets in the plurality of combinations of the plurality of sequences, respectively, the $(N_{max} - N_{min} + 1)$ sets corresponding to the plurality of different n-s, respectively.

12. A base station, comprising:

reception circuitry, which, in operation, receives a signal; and
control circuitry, which, in operation, identifies, based on an association of information on a number of information bits with a sequence or a combination of sequences in an uplink transmission without using a reference signal, the number of the information bits corresponding to a sequence included in the signal.

13. A communication method, comprising:

determining, by a terminal, one sequence or one combination from a plurality of sequences or a plurality of combinations of sequences according to information on a number of information bits in an uplink transmission without using a reference signal; and
transmitting, by the terminal, the one sequence or a sequence included in the one combination, in the uplink transmission without using the reference signal.

14. A communication method, comprising:

receiving, by a base station, a signal; and
identifying, by the base station, based on an association of information on a number of information bits with a sequence or a combination of sequences in an uplink transmission without using a reference signal, the number of the information bits corresponding to a sequence included in the signal.

|  | PUCCH format 0 | PUCCH format 1 | PUCCH format 2 | PUCCH format 3 | PUCCH format 4 |
|---|---|---|---|---|---|
| Use case | Short PUCCH HARQ/SR 1 - 2 bits | Long PUCCH HARQ/SR 1 - 2 bits | Short PUCCH Any UCI >2 bits | Long PUCCH Any UCI >2 bits | Long PUCCH Any UCI >2 bits |
| Duration | 1-2 symbols | 4-14 symbols | 1-2 symbols | 4-14 symbols | 4-14 symbols |
| Starting symbol | Anywhere unless the PUCCH cross slot boundary | | | | |
| RB size | 1 RB | 1 RB | 1-16 RBs | 1-16 RBs | 1 RB |
| CDM capacity | 6 (1 bit) 3 (2 bits) | 36 (14 symbols with frequency hopping) 84 (14 symbols without frequency hopping) | 1 | 1 | 2 or 4 |
| Multiplexing | Cyclic shift | Cyclic shift + TD-OCC | - | - | FD-OCC |
| Coding scheme | - | - | Reed-Muller (up to 11 bits) Polar (>11 bits) | | |
| Waveform | Singe-carrier | Singe-carrier | CP-OFDM | Singe-carrier | Singe-carrier |

FIG. 1

EP 4 503 481 A1

$N_{symb}$ OFDM symbols

Sequence pool (N-bit UCI)

| Sequence #0 |
| Sequence #1 |
| Sequence #2 |

:

| Sequence #$2^N$-1 |

UCI information
(N bits) ⟹

⟹ | Sequence #n | ⟹

$N_{RB}$ RBs

Map to PUCCH resource

FIG. 2

FIG. 3

EP 4 503 481 A1

EP 4 503 481 A1

Sequence pool (S)

| Sequence #0 |
| Sequence #1 |
| Sequence #2 |
| Sequence #3 |
| Sequence #4 |
| Sequence #5 |

Candidate of sequence combination

| Sequence #0 |
| Sequence #1 |

| Sequence #0 |
| Sequence #2 |

| Sequence #0 |
| Sequence #3 |

...

| Sequence #5 |
| Sequence #4 |

UCI information (N bits)

| Sequence #n |
| Sequence #m |

$N_{symb}$ OFDM symbols

$N_{RB}$ RBs

Map to PUCCH resource

FIG. 4

FIG. 5

100

CONTROLLER ← RECEIVER

FIG. 6

200

CONTROLLER → TRANSMITTER

FIG. 7

<u>100</u>

FROM CONTROLLER 101    FROM CONTROLLER 101

DL DATA SIGNAL → **ENCODER** (104) → **MODULATOR** (105) → **SIGNAL ASSIGNER** (106) → **TRANSMITTER** (107)

**HIGHER-LAYER CONTROL SIGNAL GENERATOR** (102)

**CONTROLLER** (101)

**DOWNLINK CONTROL INFORMATION GENERATOR** (103)

UCI ← **DECODER** (111) ← **DEMODULATOR** (110) ← **EXTRACTOR** (109) ← **RECEIVER** (108)

## FIG. 8

FIG. 9

```
                        ┌─────────────┐
                        │    Start    │
                        └──────┬──────┘
                               │
                               ▼
        ┌─────────────────────────────────────────────────────┐
        │ ACQUIRE INFORMATION ON SEQUENCE POOL (OR CANDIDATE FOR │  S101
        │ COMBINATION OF SEQUENCES) AND PUCCH RESOURCE          │
        └──────────────────────┬──────────────────────────────┘
                               │
                               ▼
                 ┌──────────────────────────┐
                 │    RECEIVE PDCCH (DCI)    │  S102
                 └────────────┬─────────────┘
                              │
                              ▼
                 ┌──────────────────────────┐
                 │  RECEIVE AND DECODE PDSCH │  S103
                 └────────────┬─────────────┘
                              │
                              ▼
                 ┌──────────────────────────┐
                 │  GENERATE UCI (ACK/NACK)  │  S104
                 └────────────┬─────────────┘
                              │
                              ▼
        ┌─────────────────────────────────────────────┐
        │  SELECT SEQUENCE OR COMBINATION OF SEQUENCES │  S105
        └──────────────────────┬──────────────────────┘
                               │
                               ▼
        ┌─────────────────────────────────────────────┐
        │   MAP SELECTED SEQUENCE(S) TO PUCCH RESOURCE │  S106
        └──────────────────────┬──────────────────────┘
                               │
                               ▼
                 ┌──────────────────────────┐
                 │   TRANSMIT UCI WITH PUCCH │  S107
                 └────────────┬─────────────┘
                              │
                              ▼
                        ┌─────────────┐
                        │     End     │
                        └─────────────┘
```

FIG. 10

FIG. 11

| NUMBER OF UCI BITS | UCI BIT SEQUENCE | SEQUENCE NUMBER | |
|---|---|---|---|
| 1 | 0 | #0 | Subset for 1-bit UCI |
| | 1 | #1 | |
| 2 | 00 | #2 | Subset for 2-bit UCI |
| | 01 | #3 | |
| | 10 | #4 | |
| | 11 | #5 | |
| 3 | 000 .. 111. | #6 ... #13 | Subset for 3-bit UCI |
| 4 | 0000 ... 1111 | #14 ... #29 | Subset for 4-bit UCI |
| ... | ... | ... | |
| 11 | 00000000000 00000000001 ... 11111111111 | #2046 #2047 ... #4093 | Subset for 11-bit UCI |

FIG. 12

EP 4 503 481 A1

| $N_{symb}$ | $N_O$ | $N_{NO}$ |
|---|---|---|
| 4 | 48 | 86 |
| 5 | 60 | 69 |
| 6 | 72 | 57 |
| 7 | 84 | 49 |
| 8 | 96 | 43 |
| 9 | 108 | 38 |
| 10 | 120 | 35 |
| 11 | 132 | 32 |
| 12 | 144 | 29 |
| 13 | 156 | 27 |
| 14 | 168 | 25 |

FIG. 13

| SEQUENCE NUMBER | Cyclic shift | OCC index | M sequence initialization index |
|---|---|---|---|
| #0 | 0 | 0 | 0 |
| #1 | 1 | 0 | 0 |
| #2 | 2 | 0 | 0 |
| ... | ... | 0 | 0 |
| #11 | 11 | 0 | 0 |
| #12 | 0 | 1 | 0 |
| ... | ... | 1 | 0 |
| #23 | 11 | 1 | 0 |
| ... | ... | ... | 0 |
| #72 ... #83 | #0 ... #1 | 6 | 0 |
| #84 ... #95 | #0 ... #1 | 0 | 1 |
| ... | ... | ... | 1 |
| #156 ... #167 | #0 ... #1 | 6 | 1 |

FIG. 14

EP 4 503 481 A1

FIG. 15

EP 4 503 481 A1

| $N_{symb}$ | $N_O$ | $N'_O$ | $N_{NO}$ |
|---|---|---|---|
| 4 | 48 | 32 | 128 |
| 5 | 60 | 32 | 128 |
| 6 | 72 | 64 | 64 |
| 7 | 84 | 64 | 64 |
| 8 | 96 | 64 | 64 |
| 9 | 108 | 64 | 64 |
| 10 | 120 | 64 | 64 |
| 11 | 132 | 128 | 32 |
| 12 | 144 | 128 | 32 |
| 13 | 156 | 128 | 32 |
| 14 | 168 | 128 | 32 |

FIG. 16

FIG. 17

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

5 GC

SMF

UE IP address
allocation

PDU Session
Control

internet

FIG. 18

FIG. 19

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 20

FIG. 21

## INTERNATIONAL SEARCH REPORT

International application No.

**PCT/JP2022/047549**

### A. CLASSIFICATION OF SUBJECT MATTER

*H04J 13/10*(2011.01)i; *H04L 27/26*(2006.01)i
FI:  H04J13/10; H04L27/26 113

According to International Patent Classification (IPC) or to both national classification and IPC

### B. FIELDS SEARCHED

Minimum documentation searched (classification system followed by classification symbols)

H04J13/10; H04L27/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2021/0092734 A1 (QUALCOMM INCORPORATED) 25 March 2021 (2021-03-25) paragraphs [0071]-[0074], [0127]-[0129], fig. 3B | 1, 12-14 |
| A | | 2-11 |
| X | QUALCOMM INCORPORATED. Potential coverage enhancement techniques for PUCCH[online]. 3GPP TSG RAN WG1 #103-e R1-2009315. 01 November 2020 section 2.1, fig. 2 | 1, 12-14 |
| A | | 2-11 |
| A | JP 2020-504955 A (LG ELECTRONICS INC ) 13 February 2020 (2020-02-13) paragraphs [0294]-[0302] | 8-11 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 January 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/047549**

| Patent document cited in search report | | | Publication date (day/month/year) | Patent family member(s) | | | Publication date (day/month/year) |
|---|---|---|---|---|---|---|---|
| US | 2021/0092734 | A1 | 25 March 2021 | WO | 2021/061726 | A1 | |
| | | | | paragraphs [0071]-[0074], [0126]-[0128], fig. 3B | | | |
| | | | | CN | 114503730 | A | |
| | | | | KR | 10-2022-0066062 | A | |
| JP | 2020-504955 | A | 13 February 2020 | US | 2019/0246416 | A1 | |
| | | | | paragraphs [0297]-[0305] | | | |
| | | | | WO | 2018/203686 | A1 | |
| | | | | KR | 10-2018-0122564 | A | |
| | | | | CN | 110431905 | A | |

Form PCT/ISA/210 (patent family annex) (January 2015)

# EP 4 503 481 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022049007 A


**Non-patent literature cited in the description**

- NR Base Station (BS) radio transmission and reception (Release 15). *3GPP TS38.104 V15.16.0*, December 2021
- **CHINA TELECOM**. New WID on NR coverage enhancements. *RP-202928*, December 2020
- NR Physical channels and modulation (Release 16). *3GPP TS38.211 V16.8.0*, December 2021
- NR Multiplexing and channel coding (Release 16). *3GPP TS38.212 V16.8.0*, December 2021
- NR Physical layer procedures for control (Release 16). *3GPP TS38.213 V16.8.0*, December 2021
- NR Physical layer procedures for data (Release 16). *3GPP TS38.214 V16.8.0*, December 2021
- **HUAWEI** ; **HISILICON**. Potential solutions for PUCCH coverage enhancement. *R1-2007584*, 26 October 2020
- **QUALCOMM INCORPORATED** ; **HUAWEI** ; **HISILICON**. Potential coverage enhancement techniques for PUCCH. *R1-2009315*, 26 October 2020
- **CMCC**. Discussion on the PUCCH coverage enhancement. *R1-2008027*, August 2020